(19) Europäisches Patentamt
European Patent Office
Office européen des brevets

(11) EP 3 188 815 B1

(12) FASCICULE DE BREVET EUROPEEN

(45) Date de publication et mention de la délivrance du brevet:
**09.06.2021 Bulletin 2021/23**

(21) Numéro de dépôt: **15766073.9**

(22) Date de dépôt: **02.09.2015**

(51) Int Cl.:
***B01D 11/02*** *(2006.01)* ***C22B 3/00*** *(2006.01)*

(86) Numéro de dépôt international:
**PCT/EP2015/070061**

(87) Numéro de publication internationale:
**WO 2016/034630 (10.03.2016 Gazette 2016/10)**

(54) **PROCÉDÉ D'EXTRACTION SÉLECTIF DE PLATINOIDES, À PARTIR D'UN SUPPORT LES CONTENANT, AVEC UN MILIEU D'EXTRACTION CONSTITUÉ PAR UN FLUIDE SUPERCRITIQUE ET UN LIGAND ORGANIQUE**

VERFAHREN ZUR SELEKTIVEN EXTRAKTION VON PLATINOIDEN AUS EINEM PLATINOIDHALTIGEN TRÄGER MIT EINEM EXTRAKTIONSMEDIUM AUS EINER SUPERKRITISCHEN FLÜSSIGKEIT UND EINEM ORGANISCHEN LIGAND

METHOD OF SELECTIVE EXTRACTION OF PLATINOIDS, FROM A SUPPORT CONTAINING SAME, WITH AN EXTRACTION MEDIUM CONSISTING OF A SUPERCRITICAL FLUID AND AN ORGANIC LIGAND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2014 FR 1458226**

(43) Date de publication de la demande:
**12.07.2017 Bulletin 2017/28**

(73) Titulaire: **Commissariat à l'Énergie Atomique et aux Énergies Alternatives**
**75015 Paris (FR)**

(72) Inventeurs:
- **GOETTMAN, Frédéric**
**84350 Courthezon (FR)**
- **HERTZ, Audrey**
**30200 Bagnols-sur-Cèze (FR)**
- **MONGIN, Sandrine**
**74160 Saint-Julien en Genevois (FR)**

(74) Mandataire: **Brevalex**
**56, Boulevard de l'Embouchure**
**B.P. 27519**
**31075 Toulouse Cedex 2 (FR)**

(56) Documents cités:
**EP-A1- 1 743 044**
**US-A- 5 641 887**
**US-A- 5 792 357**
**US-A1- 2003 183 043**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 188 815 B1

## Description

## DOMAINE TECHNIQUE

L'invention concerne un procédé d'extraction sélectif d'un métal de la famille des platinoïdes à partir d'un support les contenant, qui utilise un milieu d'extraction constitué par un fluide supercritique et un ligand organique.

Le domaine technique de l'invention peut être défini, de manière générale, comme celui du traitement de supports et/ou substrats notamment en céramique contenant des métaux de la famille des platinoïdes afin de séparer et de récupérer ces métaux ainsi que ces supports.

## ÉTAT DE LA TECHNIQUE ANTÉRIEURE

La catalyse hétérogène est couramment utilisée dans de nombreux secteurs de l'industrie.

Elle est par exemple essentielle dans le domaine de la pétrochimie ou de la préparation de polymères de synthèse, et elle aussi mise en œuvre dans l'industrie pétrolière et l'industrie automobile notamment pour le traitement des gaz d'échappement.

Dans la majorité des cas, les catalyseurs utilisés sont constitués d'une phase active dispersée de façon homogène sur un support poreux.

Les supports privilégiés sont généralement des oxydes minéraux, comme l'oxyde de cérium, et la phase active est le plus souvent constituée de métaux de la famille des platinoïdes tels que le platine, le palladium, ou le rhodium.

En effet, les propriétés électroniques particulières des platinoïdes en font les catalyseurs les plus intéressants, notamment pour les Nouvelles Technologies de l'Energie (NTE) comme le reformage catalytique du méthane, ou la conversion électro- thermo-chimique de l'eau en hydrogène.

Or, d'une part la production mondiale de platinoïdes est très limitée et très concentrée. Ainsi, en 2012, par exemple, la Russie et l'Afrique du Sud totalisent à elles seules près de 78% de la production mondiale du palladium et 86% de la production mondiale du platine.

D'autre part, la consommation mondiale de platinoïdes est importante. En effet, les catalyseurs hétérogènes utilisés par exemple dans le domaine automobile, peuvent contenir des quantités élevées de platinoïdes. Ainsi les pots catalytiques peuvent contenir jusqu'à quelques grammes de Pt et un gramme de Rh.

On se trouve donc à la fois face à un risque d'épuisement de platinoïdes et à une situation de dépendance des industries européennes vis-à-vis des pays producteurs de platinoïdes.

Cette situation de dépendance fait peser un risque important sur ces industries et peut à terme menacer le développement à grande échelle de certaines technologies essentielles.

Le recyclage des platinoïdes à partir des catalyseurs hétérogènes est donc d'un intérêt crucial.

Aujourd'hui, la plupart des procédés ayant pour but le recyclage des platinoïdes qui se trouvent sur des supports céramiques sont soit des procédés pyrométallurgiques, soit des procédés qui comprennent une étape d'attaque chimique par voie humide, généralement avec un acide, puis une étape d'extraction.

Dans ces deux procédés, les supports en céramique sur lesquels sont présents les platinoïdes sont détruits. Ces procédés de recyclage ne permettent donc que la récupération des platinoïdes et génèrent des déchets qu'il est nécessaire de traiter.

Il est très gênant que la céramique des supports ne puisse être aussi récupérée comme les platinoïdes, car elle peut avoir une valeur importante. C'est par exemple le cas des assemblages membrane-électrodes des piles à combustible basse température (PEMFC).

C'est la raison pour laquelle ont été proposés des procédés de traitement des matériaux contenant des platinoïdes qui permettent de récupérer les platinoïdes tout en préservant les supports en céramique en vue de leur réutilisation.

Ainsi, il a été notamment proposé d'effectuer l'extraction des métaux de la famille des platinoïdes contenus dans des supports catalytiques par un procédé utilisant du $CO_2$ supercritique ($CO_2$-SC) additionné de ligands, afin de permettre à la fois la récupération du métal et la préservation du support catalytique.

Ainsi plusieurs ligands, associés à du $CO_2$ supercritique ont-ils été expérimentés dans la littérature.

Le document de S. Iwao, S.A. El-Fatah, K. Furukawa, T. Seki, M. Sasaki, M. Goto, « Recovery of palladium from spent catalyst with supercritical CO2 and chelating agent », J. of Supercritical Fluids, 2007, 42, p.200-204 [1], décrit la récupération du palladium à partir de catalyseurs usés à l'aide de $CO_2$ supercritique et d'un agent chélatant choisi parmi l'acétylacétone (AA), un complexe de phosphate de tri-n-butyle et d'acide nitrique, et l'acide bis (2,2,4-triméthylpentlyl)monothiophosphinique (Cyanex® 302).

Le document de O. Aschenbrenner, S. Kemper, E. Dinjus, N. Dahmen, K. Schaber, « Solubility of β-diketonates, cyclopentadienyls, and cyclooctadiene complexes with various metals in supercritical carbon dioxide", J. of Supercritical Fluids, 2007, 41, p.179-186 [2], étudie la solubilité de complexes de divers métaux avec des ligands β-dicétonates, cyclopentediényles, et cyclooctadiènes dans le $CO_2$ supercritique.

Le document de Y. Yamini, A. Saleh, M. Khajeh, « Orthogonal array design for the optimization of supercritical carbon dioxide extraction of platinum (IV) and rhenium (VII) from a solid matrix using Cyanex 301", Separation and Purification Technologies. 2008, 61, p.109-114 [3], concerne l'optimisation de l'extraction du platine (IV) et du rhénium (VII) à partir d'une matrice solide par le $CO_2$ supercritique contenant du Cyanex® 301 en tant qu'agent chélatant US2003183043 divulgue

l'extraction d'espèces métalliques, telles que le Pt ou Pd, en formant un mélange comprenant un fluide supercritique, un agent d'extraction et des espèces métalliques, et en soumettant le mélange à des vibrations ultrasoniques.

US 5641887 divulgue un procédé d'extraction des métaux dans le dioxyde de carbone avec des agents de chélation, ledit agent chélatant comprenant généralement un groupe chélatant conventionnel et un groupe fonctionnel soluble dans le CO2 attaché de manière covalente au groupe chélatant.

Parmi les composés utilisés en tant que ligands dans le $CO_2$ supercritique dans les procédés d'extraction des platinoïdes, on peut notamment citer :

- les dithiocarbamates qui ont une efficacité assez limitée à cause de leur faible solubilité dans le $CO_2$-SC.
- les β-dicétones, qui sont également peu solubles et doivent donc être fluorées pour accroître leur solubilité dans le $CO_2$ supercritique et être utilisées dans ces procédés d'extraction. De plus, en présence d'humidité, l'efficacité des β-dicétones est très faible.
- les composés macrocycliques comme les éthers couronnes ou les calixarènes.
- ces composés ont un prix élevé et sont peu disponibles dans le commerce. De plus, ces composés doivent également, dans certains cas, être fluorés afin d'améliorer leur solubilité dans le $CO_2$ supercritique. Les composés organophosphorés, comme les composés de type CYANEX®, sont quant à eux disponibles dans le commerce mais leur efficacité d'extraction est faible.

Tous les ligands mentionnés plus haut sont des échangeurs ioniques qui extraient donc le métal sous forme ionique.

Pour pouvoir récupérer les métaux sous forme métallique et les recycler, il est donc nécessaire à l'issue de l'étape d'extraction des métaux, d'effectuer une étape de purification, et une étape de réduction des métaux extraits sous forme ionique.

Ces étapes de purification et de réduction sont longues et coûteuses.

De plus, comme on l'a déjà mentionné plus haut, certains des ligands cités plus haut sont très peu solubles dans le $CO_2$-SC, et ils doivent donc être fluorés ce qui rend leur préparation complexe et coûteuse.

Il existe donc un besoin pour un procédé permettant d'extraire et de récupérer sélectivement les platinoïdes contenus dans un support céramique, notamment dispersés sur une surface d'un support céramique, qui n'entraîne ni destruction du support comme les procédés pyrométallurgiques, ou les procédés qui comprennent une étape d'attaque chimique, ni endommagement du support.

Il existe notamment un besoin pour un procédé permettant d'extraire et de récupérer sélectivement les platinoïdes contenus dans des supports céramiques qui, tout en présentant les avantages des procédés connus d'extraction des platinoïdes utilisant un milieu d'extraction comprenant un fluide supercritique et un ligand, en termes d'absence de destruction et d'endommagement du support, n'en présente cependant pas les inconvénients exposés plus haut, liés notamment à la présence obligatoire d'étapes de purification et de réduction des métaux extraits sous forme ionique et à la fluoration des ligands.

Il existe, en outre, un besoin pour un tel procédé qui présente une efficacité d'extraction élevée et améliorée, par rapport aux procédés connus utilisant par exemple des ligands tels que les Cyanex®, et une excellente sélectivité.

Le but de l'invention est de fournir un procédé d'extraction sélectif d'un métal de la famille des platinoïdes à partir d'un support les contenant, utilisant un milieu d'extraction comprenant un fluide supercritique et un ligand, qui réponde à ces besoins.

Le but de l'invention est encore de fournir un tel procédé qui ne présente pas les inconvénients, défauts, limitations et désavantages des procédés de l'art antérieur et qui apporte une solution aux problèmes posés par les procédés de l'art antérieur

## EXPOSÉ DE L'INVENTION

Ce but, et d'autres encore sont atteints, conformément à l'invention par un procédé d'extraction sélectif d'un métal, ce procédé étant tel que défini dans la revendication 1.

Le milieu d'extraction mis en œuvre lors de l'étape a) est constitué par un fluide dense sous pression, notamment supercritique, contenant un ligand organique. Cela signifie que le milieu d'extraction est constitué par un fluide dense sous pression, notamment supercritique, et par un ligand organique, et ne contient pas d'autres composés. En particulier, le milieu d'extraction ne contient pas d'eau, ou de solution aqueuse, notamment de solution acide. Il n'y a donc pas d'émulsion ou de micro-émulsion dans le milieu d'extraction.

Le milieu d'extraction est homogène et monophasique. Le ligand est en effet directement solubilisé dans le fluide dense sous pression, notamment supercritique, formant ainsi un milieu d'extraction qui est homogène, que l'on peut décrire comme une solution du ligand dans le fluide dense sous pression, et qui n'est pas sous la forme d'une émulsion ou d'une micro-émulsion.

Après la mise en contact, on obtient d'une part un support en céramique appauvri en ledit métal, voire exempt dudit métal, et d'autre part un milieu constitué par le fluide dense sous pression, notamment supercritique, contenant le complexe du ligand organique avec le métal à l'état (0).

Ce milieu obtenu à l'issue de l'étape a) est constitué par le fluide dense sous pression, notamment supercritique, contenant le complexe du ligand organique avec le métal à l'état (0).

Cela signifie que ce milieu d'extraction est constitué par le fluide dense sous pression, notamment supercritique, et par le complexe du ligand organique avec le métal à l'état (0), et ne contient pas d'autres composés. En particulier, le milieu d'extraction ne contient pas d'eau, ou de solution aqueuse, notamment de solution acide. Il n'y a donc pas d'émulsion ou de micro-émulsion dans le milieu d'extraction.

Ce milieu est homogène et monophasique. Le complexe du ligand avec le métal est en effet directement solubilisé dans le fluide dense sous pression, notamment supercritique, formant ainsi un milieu qui est homogène, que l'on peut décrire comme une solution du complexe dans le fluide dense sous pression, et qui n'est pas sous la forme d'une émulsion ou d'une micro-émulsion.

Le procédé selon l'invention comprend une suite spécifique d'étapes spécifiques qui n'est décrite, ni suggérée dans l'art antérieur, tel que représenté en particulier par les documents cités plus haut.

Le procédé selon l'invention se distingue fondamentalement des procédés de l'art antérieur en ce qu'il utilise un ligand organique spécifique qui est un ligand sélectif du métal capable de former un complexe avec ledit métal à l'état d'oxydation 0, à l'état métallique, à l'état de métal élémentaire.

Le ligand utilisé dans le procédé selon l'invention est un ligand adapté à la structure électronique très particulière des platinoïdes. Le ligand utilisé dans le procédé selon l'invention peut être qualifié de « ligand mou », formant un complexe ligand/métal (0), c'est-à-dire qui possède des propriétés complexantes des métaux (0).

Un exemple d'un tel ligand « mou » est le dodécanethiol qui est connu pour posséder de telles propriétés complexantes des métaux (0) comme cela est exposé dans les documents de L. Lingxingyu, K. Leopold, J. Anal. Chem. 84 (2012), 4340-4349 ; Y. J. Park, J. Hazardous Materials, 164 (2009), 1152-1158 [4].

L'utilisation d'un tel ligand dans un procédé d'extraction en milieu supercritique n'est ni décrite, ni suggérée dans l'art antérieur.

En d'autres termes, dans le procédé selon l'invention, on utilise un ligand permettant l'extraction directe du métal à l'état 0, à l'état métallique, à savoir à l'état de métal élémentaire, alors que dans les procédés de l'art antérieur, les ligands utilisés sont toujours des échangeurs ioniques qui imposent que le métal extrait soit sous forme ionique avec tous les inconvénients qui en résultent.

Le procédé selon l'invention se distingue aussi des procédés de l'art antérieur, comme on l'a déjà exposé plus haut, en ce que le milieu d'extraction et le milieu obtenu à l'issue de l'étape a) sont homogènes et monophasiques et ne contiennent pas d'eau ou de solution aqueuse, notamment de solution acide. Ces milieux se présentent sous la forme de solutions du ligand spécifique ou du complexe dans le fluide dense sous pression, et non sous la forme d'émulsions ou de micro-émulsions.

Le procédé selon l'invention répond aux besoins énumérés plus haut. tel que défini plus haut, notamment choisi parmi les métaux

Le procédé selon l'invention d'extraction sélectif d'un métal de la famille des platinoïdes à partir d'un support le contenant, qui utilise un milieu d'extraction comprenant un fluide supercritique et un ligand ne présente pas les inconvénients des procédés de l'art antérieur exposés plus haut, notamment du fait de la mise en œuvre d'un ligand organique sélectif du métal capable de former un complexe avec ledit métal à l'état 0 qui permet l'extraction directement sous forme métallique, et non sous forme ionique du métal ; par exemple, dans le procédé selon l'invention, les particules métalliques contenues dans un support, notamment dispersées sur une surface externe d'un support sont directement extraites puis récupérées sous cette forme de particules métalliques.

De ce fait, le procédé selon l'invention ne nécessite pas d'étape de purification ni d'étape de réduction des métaux extraits puisqu'ils sont extraits directement sous forme métallique. Le nombre d'étapes, la durée et le coût du procédé selon l'invention sont ainsi réduits.

Dans le procédé selon l'invention le support est préservé, il n'est pas détruit, par exemple par une attaque acide, ni même endommagé, et il peut être récupéré et réutilisé.

Les ligands utilisés dans le procédé selon l'invention sont facilement disponibles dans le commerce, sont solubles dans les fluides denses sous pression tels que le $CO_2$ supercritique, et ne nécessitent pas de traitement de fluoration pour améliorer leur solubilité.

Le procédé selon l'invention permet d'obtenir une efficacité d'extraction accrue par rapport à des procédés mettant en œuvre des ligands comme les Cyanex® (voir les exemples fournis plus bas).

Les ligands spécifiques utilisés dans le procédé selon l'invention, possèdent une sélectivité vis-à-vis des platinoïdes meilleure que les ligands utilisés jusqu'alors, tels que les Cyanex® (voir les exemples fournis plus bas).

La céramique du support peut être notamment choisie parmi les oxydes de métaux tels que l'alumine, et l'oxyde de cérium ; les carbures de métaux tels que le carbure de silicium ; les silicates de métaux tels que la cordiérite ; et leurs mélanges.

Le support en céramique est généralement un support poreux.

Par support poreux, on entend généralement que ce support présente une porosité de 10 à 90 % en volume, notamment de 25 à 75 % en volume.

Il n'existe aucune limitation quant à la taille et à la forme du support qui peut être traitée par le procédé selon l'invention. Ce support peut se présenter par exemple sous la forme de pièces massives de grande taille ou sous la forme de particules discrètes telles que billes, ou grains, granulés d'une taille par exemple de 100 nm à

10 mm

Un seul support ou plusieurs supports peuvent être traités par le procédé selon l'invention.

Le support contenant un métal tel que défini plus haut, notamment choisi parmi les métaux de la famille des platinoïdes peut être notamment un catalyseur usé. Ce catalyseur usé peut être un catalyseur utilisé dans l'automobile, par exemple un catalyseur utilisé pourtraiter les gaz d'échappement, dans l'industrie chimique ou l'industrie pétrolière.

Le métal est choisi parmi les métaux de la famille des platinoïdes tels que le platine, le palladium, le rhodium, le ruthénium; l'or; l'argent; et leurs alliages et mélanges.

Avantageusement, le métal est sous la forme de nanoparticules dispersées sur au moins une surface externe du support en céramique et le métal est extrait sous la forme de nanoparticules du métal à l'état métallique (0).

Par nanoparticules, on entend des particules dont la taille, définie par la plus grande dimension est de 1 à 500 nm, de préférence de 1 à 100 nm, de préférence encore de 1 à 10 nm, par exemple 3 nm.

Avantageusement, le fluide est choisi parmi le dioxyde de carbone ; l'hélium ; le xénon ; l'azote ; le protoxyde d'azote ; l'hexafluorure de soufre ; les alcanes gazeux de 1 à 5 atomes de carbone tels que le méthane, l'éthane, les propanes, le n-butane, l'isobutane, et le néopentane ; les hydrocarbures fluorés gazeux ; les hydrocarbures gazeux chlorés et/ou fluorés, par exemple, les hydrogénochlorofluorocarbures, dits HCFC, ou leurs substituts, dans le cadre de la législation en cours ; l'ammoniac; et leurs mélanges.

On peut bien sûr utiliser tout composé pouvant présenter un état dense et sous pression, en particulier, supercritique, et dont l'utilisation reste compatible avec le ou les matériaux constitutifs du support à traiter.

Le dioxyde de carbone est préféré car il présente l'avantage d'une mise en œuvre relativement facile : il est bon marché, non toxique, ininflammable et possède des conditions critiques facilement accessibles (pression critique : Pc de 7,3 MPa et température critique Tc de 31,1°C).

Avantageusement, le fluide dense sous pression est à l'état de liquide, de gaz dense, ou à l'état supercritique.

Avantageusement, le fluide dense sous pression, tel que du $CO_2$, est à une pression de 50 à 700 bar, et à une température de 15°C à 200°C, par exemple à une pression de 250 bar et à une température de 60°C à 110°C.

Le ligand organique sélectif du métal est choisi parmi les thiols de formule RSH, dans laquelle R représente un groupe alkyle linéaire ou ramifié de 1 à 20 C ; de préférence de 1 à 12 C, de préférence encore de 1 à 10 C, par exemple le ligand organique sélectif du métal est le dodécanethiol. Ces ligands de formule RSH sont constitués par une simple chaîne carbonée (sans atomes autres que C et H, tels que Si ou F) et par une fonction chélatante qui est un simple groupe SH.

Ces ligands sont facilement disponibles dans le commerce et de structure simple et ne doivent pas être spécialement préparés par un procédé long et complexe.

Avantageusement, le ligand organique sélectif du métal représente de 1 à 20% en masse du milieu d'extraction.

Avantageusement simultanément à la mise en contact, on soumet le support et/ou le milieu d'extraction à une action mécanique.

Avantageusement, l'action mécanique est choisie parmi une ou plusieurs parmi une agitation, une turbulence, un cisaillement, une action électromécanique et une action ultrasonique.

Le procédé selon l'invention peut comprendre en outre, à l'issue de l'étape c), une étape d) au cours de laquelle le métal est récupéré à partir du complexe, par exemple par traitement thermique du complexe.

Ou bien, le complexe peut être utilisé directement. Par exemple, le complexe peut être déposé sur un nouveau support.

Le dépôt sur le nouveau support peut être notamment réalisé par un procédé de dépôt en milieu supercritique.

Dans un premier mode de réalisation du procédé selon l'invention, celui-ci peut être réalisé en mode statique, et il comprend en outre préalablement à l'étape a) une étape a1) :

a1) on place le support en céramique contenant le métal et le ligand organique sélectif du métal et capable de former un complexe avec ledit métal à l'état 0, dans l'enceinte d'extraction, puis on introduit le fluide dans l'enceinte d'extraction, et on établit dans l'enceinte d'extraction une température et une pression telles que le fluide soit dense et sous pression ;

et dans ce premier mode de réalisation du procédé selon l'invention, lors de l'étape b), la pression dans l'enceinte d'extraction est ramenée à la pression atmosphérique, la température est ramenée à la température ambiante, le fluide est évacué de l'enceinte d'extraction sous forme d'un courant de gaz, le complexe est entraîné avec le courant de gaz, et éventuellement le complexe est récupéré dans un séparateur placé à la sortie de l'enceinte d'extraction .

Avantageusement, lors de l'étape a) de ce premier mode de réalisation du procédé selon l'invention, le support en céramique contenant le métal est mis en contact avec le milieu d'extraction pendant une durée de 1 à 24 heures.

Avantageusement, dans ce premier mode de réalisation du procédé selon l'invention, la proportion en masse du support en céramique contenant le métal par rapport au volume de ligand organique sélectif est de 0,01 g/mL à 0,5 g/mL, par exemple de 0,25 g/ mL.

Avantageusement dans ce premier mode de réalisation du procédé, lors de l'étape a1), on place le

support en céramique contenant ledit métal et le ligand organique sélectif dans l'enceinte d'extraction de façon à ce que le support en céramique contenant le métal et le ligand organique sélectif soient en contact direct ou bien dans ce premier mode de réalisation du procédé, lors de l'étape a1), on place le support en céramique contenant ledit métal et le ligand organique sélectif dans l'enceinte de façon à ce que le support en céramique contenant le métal et le ligand organique sélectif ne soient pas en contact direct (voir par exemple Figure 8).

Dans un second mode de réalisation du procédé selon l'invention, celui-ci peut être réalisé en mode dynamique, et il comprend en outre préalablement à l'étape a) les étapes a2), a3) et a4) :

a2) on place le ligand organique sélectif dans une enceinte de solubilisation en communication fluidique avec l'enceinte d'extraction, et on place le support en céramique contenant le métal dans l'enceinte d'extraction ; puis
a3) on envoie en continu un courant de fluide dense sous pression dans l'enceinte de solubilisation, moyennant quoi on obtient le milieu d'extraction constitué par le fluide dense sous pression contenant un ligand organique sélectif;
a4) on envoie en continu un courant du milieu d'extraction dans l'enceinte d'extraction;

et dans ce second mode de réalisation du procédé selon l'invention, à l'issue de l'étape a), un courant du fluide dense sous pression contenant le complexe du ligand organique avec le métal à l'état 0 est soutiré dans l'enceinte d'extraction et envoyé dans un réservoir où sont réalisées les étapes b) puis c).

Avantageusement dans ce second mode de réalisation du procédé selon l'invention, lors de l'étape b) la pression dans le réservoir est ramenée à la pression atmosphérique, la température est ramenée à la température ambiante et le fluide est évacué du réservoir sous forme de gaz tandis que le complexe du ligand organique avec le métal à l'état 0 reste dans le réservoir.

L'invention sera mieux comprise à la lecture de la description détaillée qui suit des modes de réalisation particuliers de l'invention, notamment sous la forme d'exemples, cette description étant faite en relation avec les dessins joints.

## BRÈVE DESCRIPTION DES DESSINS

- La Figure 1 est une vue schématique d'une installation pour la mise en œuvre du procédé selon l'invention selon un premier mode de réalisation de celui-ci, réalisé en mode statique ;
- La figure 2 est une vue schématique d'une installation pour la mise en œuvre du procédé selon l'invention selon un second mode de réalisation de celui-ci, réalisé en mode dynamique ;
- La Figure 3 est un graphique qui donne les rendements d'extraction du palladium (en %), obtenus avec les ligands Cyanex® 272, Cyanex® 302, et le dodécanethiol et le rendement d'extraction du platine (en %), obtenus avec le dodécanethiol lors d'essais d'extraction. Les essais d'extraction sont réalisés en mettant en contact dans un bécher, 1 g de catalyseur supporté sur de l'alumine (1g représente la masse totale d'alumine et de métal) et 20 mL de ligand à 60°C pendant 72 heures.
- La Figure 4 est un graphique qui donne les rendements d'extraction du palladium (en %) et du platine (en %), obtenus avec le ligand dodécanethiol pour différentes durées de contact, à savoir 5, 24, 42, et 72 heures pour le palladium, et 5, et 72 heures pour le platine, lors d'essais d'extraction. Les essais d'extraction sont réalisés en mettant en contact dans un bécher, 0,25 g de catalyseur supporté sur de l'alumine (0,25 g représente la masse totale d'alumine et de métal) et 5 mL de ligand à 60°C pendant la durée voulue.
- La Figure 5 est un graphique qui donne les rendements d'extraction du palladium (en %) et du platine (en %), obtenus avec le ligand dodécanethiol pour différentes températures de contact, à savoir 25°C, 60°C, 80°C, 110°C, et 150°C pour le palladium, et 60°C et 150°C pour le platine, lors d'essais d'extraction. Les essais d'extraction sont réalisés en mettant en contact dans un bécher, pendant 5 heures, 0,25 g de catalyseur supporté sur de l'alumine (0,25 g représente la masse totale d'alumine et de métal) et 5 mL de ligand à la température voulue.
- La Figure 6 est un graphique qui donne l'absorbance en fonction de la longueur d'onde (en nm) des solutions dans le dodécanethiol obtenues lors des essais d'extraction du palladium réalisés à différentes températures de contact (Figure 5).

Les essais sont réalisés en mettant en contact dans un bécher, pendant 5 heures, 0,25 g de catalyseur supporté sur de l'alumine (0,25 g représente la masse totale d'alumine et de métal) et 5 mL de ligand à la température voulue.

La courbe A est la courbe pour la solution obtenue à une température de contact de 150°C.

La courbe B est la courbe pour la solution obtenue à une température de contact de 110°C.

La courbe C est la courbe pour la solution obtenue à une température de contact de 80°C.

La courbe D est la courbe pour la solution obtenue à une température de contact de 60°C.

La courbe E est la courbe pour la solution obtenue à une température de contact de 25°C.

Est également portée sur la Figure 6 la courbe F qui est la courbe obtenue pour une solution de palladium au degré d'oxydation II.

- Les Figures 7A et 7B montrent des clichés de microscopie électronique en transmission (MET) de nanoparticules de Palladium (A) et de nanoparticules de Platine (B) dans le dodécanethiol obtenues en mettant en contact 0,25 g de catalyseur et 5 mL de ligand à 150°C pendant 5 heures.

L'échelle portée sur les Figures 7A et 7B représente 50 nm.

- La Figure 8 est un graphique qui donne le rendement d'extraction (en %) après 5 heures de mise en contact lors d'essais d'extraction du palladium réalisés en mode statique en milieu $CO_2$ supercritique comprenant le ligand dodécanethiol à 250 bars.

Les essais sont réalisés avec 0,25 g de catalyseur supporté sur de l'alumine (0,25 g représente la masse totale d'alumine et de métal) et 5 mL de ligand. Les essais sont réalisés soit avec contact direct du ligand et du catalyseur supporté (barres A et B) à 60°C (barre A grise) et 110°C (barre B blanche) ; soit sans contact direct du ligand et du catalyseur supporté, celui-ci étant placé dans un panier (barres C et D) à 60°C (barre C grise) et 110°C (barre D blanche). A titre de référence, sont également portés sur la Figure 8 les rendements d'extraction obtenus lors d'essais obtenus en mettant en contact 0,25 g de catalyseur supporté et 5 mL de dodécanethiol, sans $CO_2$ à la pression atmosphérique, pendant 5 heures respectivement à 60°C (courbe E) et à 110°C (courbe F).

- La Figure 9 est un graphique qui donne le rendement d'extraction (en %) en fonction du débit de $CO_2$ (en mL/min) lors d'essais d'extraction du palladium par le dodécanethiol en milieu supercritique réalisés en mode dynamique pendant 3 heures à 250 bar et 60°C.

Les essais sont réalisés avec 0,25 g de catalyseur supporté sur de l'alumine et à trois débits différents, à savoir depuis la gauche vers la droite : 0,5 ; 1 ; et 1,5 mL/min.

- La Figure 10 est un graphique qui donne le rendement d'extraction (en %) en fonction de la durée de l'extraction (en minutes) lors d'essais d'extraction du palladium par le dodécanethiol en milieu $CO_2$ supercritique réalisés en mode dynamique à 250 bars, 60°C, et à un débit de $CO_2$ de 0,5 mL/min.

Les essais sont réalisés avec 0,25 g de catalyseur supporté sur de l'alumine (0,25 g représente la masse totale d'alumine et de métal).

- La Figure 11 est un graphique qui donne le rendement d'extraction (en % à gauche) et la masse de palladium extraite (en g, à droite) en fonction de la quantité de catalyseur (en g), lors d'essais d'extraction du palladium par le dodécanethiol en milieu $CO_2$ supercritique réalisés en mode dynamique pendant 5 heures à 250 bar, 60°C, et à un débit de $CO_2$ 0,5 mL/min.

Les essais sont réalisés soit avec 2 g (barres de gauche), soit avec 10 g (barre de droite) de catalyseur supporté sur de l'alumine (2 g ou 10 g représentent la masse totale d'alumine et de métal).

Les barres grises hachurées représentent le rendement d'extraction du Pd et les barres noires représentent la masse de Pd extraite.

## EXPOSÉ DÉTAILLÉ DE MODES DE RÉALISATION PARTICULIERS

Dans ce qui suit, on décrit des modes de réalisation particuliers du procédé de l'invention à savoir un premier mode de réalisation du procédé selon l'invention dans lequel celui-ci est réalisé en mode dit « statique » et un second mode de réalisation du procédé selon l'invention, dans lequel celui-ci est réalisé en mode dit « dynamique ».

Cette description des modes de réalisation particuliers du procédé de l'invention est plutôt faite en relation avec les installations utilisées pour la mise en œuvre du procédé mais les enseignements qui y sont fournis s'appliquent évidement aux procédés en tant que tels.

Une installation pour la mise en œuvre du procédé selon l'invention selon un premier mode de réalisation de celui-ci, en mode statique est décrite sur la Figure 1.

Cette installation comprend un réservoir de fluide (1), par exemple de $CO_2$ liquide. Ce réservoir (1) est relié à une canalisation (2) qui permet d'acheminer le fluide jusqu'à l'enceinte ou réacteur d'extraction (3) en passant successivement par un échangeur froid (4) et une pompe haute pression (5). La pompe haute pression (5) permet d'atteindre la pression du fluide voulue, par exemple jusqu'à 300 bar.

La canalisation (2) peut également comprendre un manomètre (6) et une vanne (7), après la pompe (5) et avant l'enceinte ou réacteur (3).

Le réacteur (3) peut avoir la forme d'un cylindre droit vertical et son volume est tel qu'il permette de recevoir les supports susceptibles d'être traités par le procédé selon l'invention.

Le matériau du réacteur (3) est choisi de manière à être compatible avec le fluide dense sous pression et l'épaisseur des parois du réacteur est choisie pour résister à la pression qui règne à l'intérieur du réacteur.

Le réacteur peur être est un réacteur agité. Ainsi, le réacteur (3) représenté sur la Figure 1, comporte un agitateur (8) fixé à l'extrémité inférieure d'une tige rotative (9).

Le réacteur (3) est muni de moyens de chauffage, par exemple d'un collier chauffant céramique (10).

L'installation comprend en outre une canalisation d'évacuation ou ligne d'évent (11) qui permet d'évacuer le fluide du réacteur sous la forme d'un gaz et de ramener ainsi la pression à l'intérieur de l'enceinte à la pression atmosphérique. En d'autres termes, la dépressurisation du réacteur se fait par l'intermédiaire de la ligne d'évent (11).

La canalisation (11) peut également comprendre un manomètre (12) et une vanne (13).

L'installation peut comprendre en outre un régulateur/programmateur de température (14) relié à un thermocouple (15) placé dans les moyens de chauffage et à un thermocouple (16) placé dans le réacteur au contact du fluide. Plus exactement, le thermocouple est placé dans un doigt de gant qui plonge dans le fluide.

Le support contenant un métal tel que défini plus haut, notamment un métal choisi parmi les métaux de la famille des platinoïdes (par exemple un catalyseur supporté) et l'extractant, ligand sont tout d'abord introduits dans le réacteur.

Sur la Figure 1, on a représenté le mode de réalisation où le support contenant un métal tel que défini plus haut, notamment un métal choisi parmi les métaux de la famille des platinoïdes (par exemple un catalyseur supporté) et l'extractant, ligand sont en contact direct. Sur la Figure 1, le support, par exemple sous la forme de billes (17) est immergé dans le ligand liquide (18) placé au fond du réacteur.

Si l'on souhaite éviter un contact direct entre le support contenant le métal et le ligand alors des moyens seront prévus dans le réacteur pour recevoir le support et le maintenir à distance du ligand.

Le ligand étant généralement placé dans la partie inférieure du réacteur, au fond du réacteur, les moyens pour recevoir le support et le maintenir à distance du ligand peuvent être constitués par un réceptacle tel qu'un panier placé dans le réacteur à une hauteur telle que le support soit maintenu au-dessus du niveau supérieur du ligand au fond du réacteur.

Une installation pour la mise en oeuvre du procédé selon l'invention selon un second mode de réalisation de celui-ci, en mode dynamique est décrite sur la Figure 2.

Cette installation comprend un réservoir de fluide (21), par exemple un cylindre de $CO_2$ liquide. Ce réservoir (21) est relié à une canalisation (22) qui permet d'acheminer le fluide jusqu'à un premier réacteur (23) en passant par un échangeur froid (24) et une pompe haute pression (25). La pompe haute pression (25) permet d'atteindre la pression du fluide voulue, par exemple jusqu'à 300 bar.

La canalisation (22) comprend généralement une première vanne (26) en amont de la pompe (25), et une seconde vanne (27) entre la pompe (25) et l'échangeur (24).

La canalisation (22) arrive généralement au sommet du premier réacteur (23).

Le premier réacteur (23) est appelé réacteur ou enceinte de solubilisation.

En effet dans ce réacteur, le ligand est mis en solution dans le fluide dense sous pression.

Le premier réacteur (23) est relié à un second réacteur (28) par une canalisation (29), généralement munie d'une vanne (30).

Cette canalisation (29) relie généralement le fond du premier réacteur (23) au sommet du second réacteur (28). Mais la canalisation (29) pourrait à l'inverse relier le sommet du premier réacteur (23) au fond du second réacteur (28) ou relier les deux brides de chaque réacteur (23), (28).

Le second réacteur (28) est appelé réacteur ou enceinte d'extraction.

En effet dans ce second réacteur (28) est placé le support contenant un métal de la famille des platinoïdes et est réalisée l'extraction du métal contenu dans le support par le milieu d'extraction comprenant le fluide dense sous pression, notamment supercritique, et le ligand.

Le second réacteur (28) est relié par l'intermédiaire d'une canalisation (31) à un récipient, réservoir, dit récipient de collecte (32).

En effet, ce récipient (32) est destiné à recueillir le fluide dense sous pression chargé en complexe du ligand et du métal à l'état d'oxydation (0) issu de l'opération d'extraction réalisée dans le second réacteur.

La canalisation (31) comprend généralement à partir du second réacteur (28) une vanne de sortie (33) puis un déverseur (34).

La canalisation (31) relie généralement le fond du second réacteur (28) au sommet du récipient de collecte (32). Mais la canalisation (31) pourrait à l'inverse relier le sommet du second réacteur (28) au fond du récipient de collecte (32), ou relier la bride du second réacteur (28) et la bride du récipient de collecte (32).

L'installation comprend en outre une canalisation d'évacuation ou ligne d'évent (35) qui permet d'évacuer le fluide du récipient de collecte sous la forme d'un gaz et de ramener ainsi la pression à l'intérieur du récipient de collecte à la pression atmosphérique. En d'autres termes, la dépressurisation du récipient de collecte se fait par l'intermédiaire de la ligne d'évent (35).

En fait, la dépressurisation commence généralement à partir de la vanne (33).

Il n'y a généralement quasiment plus de pression dans le récipient de collecte (32). Le fluide, tel que le $CO_2$, est alors sous forme gazeuse et part vers l'évent (35) alors que le mélange ligand/complexe est récupéré sous la forme d'un liquide, ou sous la forme d'une suspension de particules de métal dans le ligand.

L'échangeur (24), les réacteurs (23) et (28) et le récipient de collecte (32) sont généralement placés dans une enceinte régulée en température (36) telle qu'une étuve.

L'invention va maintenant être décrite en référence aux exemples suivants, donnés à titre illustratif et non limitatif.

**Exemples** :

Exemple 1 :

Dans cet exemple, on étudie la capacité de différents ligands, molécules extractantes, complexants à extraire sélectivement le platine ou le palladium à partir de supports catalytiques sur lesquels ils sont supportés.

A cette fin, des essais sont réalisés dans un bécher sur des catalyseurs supportés commerciaux de type palladium sur alumine et platine sur alumine avec différents ligands, molécules extractantes, complexants, ou extractants.

Des essais sont ainsi réalisés avec le dodécanethiol ($CH_3(CH_2)_{10}CH_2$-SH) comme molécule extractante. Le dodécanethiol est en effet susceptible de jouer le rôle de ligand mou pour complexer les métaux de type platinoïdes sous forme de métal(0).

D'autres essais comparatifs sont réalisés avec le Cyanex® 272 et le Cyanex® 302 comme molécules extractantes.

Le Cyanex® 272 est un ligand oxygéné de type phosphonate, tandis que le Cyanex® 302 est un ligand de type thiophosphonate.

Le Cyanex® 272 et le Cyanex® 302 répondent aux formules ci-dessous :

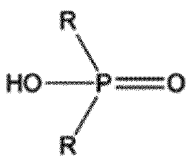
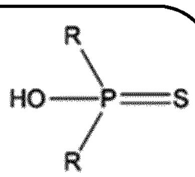

Cyanex 272 , Cyanex 302 ,

$R=(CH_3)_3CCH_2CH(CH_3)CH_2$

L'efficacité d'extraction du palladium et du platine est déterminée par contact direct de l'extractant -généralement un volume d'extractant de 5mL ou 20mL est utilisé- avec le catalyseur supporté -généralement une masse de catalyseur de 0,25 g ou 1 g (0,25 g ou 1 g représentent la masse totale d'alumine et de métal) est utilisée- à la pression atmosphérique.

Après la mise en contact de l'extractant et du catalyseur supporté, la phase solide qui est essentiellement constituée par le catalyseur supporté résiduel, est séparée de la phase organique liquide constituée par l'extractant et le métal complexé.

La phase solide est alors séchée et calcinée à 200°C pour éliminer toute trace d'extractant restant dans la porosité du support.

La quantité de métal restant dans le solide est alors déterminée par une analyse de spectroscopie d'émission atomique par plasma à couplage inductif (« *ICP-AES"* ou *« Inductively Coupled Plasma Atomic Emission Spectroscopy"* en anglais) effectuée à l'aide d'un appareil iCAP® 6300 duo de chez Thermo Scientific®.

Cette analyse est réalisée après broyage et digestion à l'acide nitrique du catalyseur. Pour cela, on dissout 0,20g de solide, dans 5 ml d'$HNO_3$ à 68%, placés dans un autoclave téfloné Modèle 4744 de chez Parr® à 150°C pendant 2h.

L'efficacité de l'extraction est définie en déterminant le rendement d'extraction R% qui est donné par la formule suivante :

$$R\% = \left(1 - \frac{c_f}{c_i}\right) \times 100$$

où $c_i$ est la concentration initiale en métal dans le catalyseur avant extraction, et $c_f$ est la concentration finale de ce même métal dans le catalyseur après extraction.

La Figure 3 donne les rendements d'extraction obtenus lors d'essais d'extraction du palladium ou du platine supportés sur de l'alumine, réalisés avec différents ligands, à savoir le dodécanethiol, le Cyanex® 272 et le Cyanex® 302.

Le mode opératoire de ces essais est celui décrit plus haut : lors de chacun des essais, on met en contact dans un bécher, 20 mL de chaque ligand avec 1 g de catalyseur métallique supporté sur de l'alumine, à 60°C pendant 72h.

Les résultats de ces essais exposés sur la Figure 3 démontrent une bonne affinité du dodécanethiol pour le palladium, comparée à celle observée pour les Cyanex® décrits dans la littérature.

En effet, le rendement d'extraction du Pd obtenu avec le dodécanethiol se situe autour de 50% après 72h de mise en contact à 60°C (Figure 3).

L'extraction du platine par le dodécanethiol -avec un rendement d'extraction R% autour de 20% après 72h de mise en contact à 60°C- bien que moins bonne que celle observée pour le palladium, a également été mise en évidence (Figure 3).

Exemple 2.

Dans cet exemple, on effectue des essais pour étudier l'influence des paramètres de durée de contact entre le ligand et le catalyseur, et de température d'extraction, sur le rendement d'extraction du Pd ou du Pt par le dodécanethiol.

Le mode opératoire de ces essais est celui décrit plus haut dans l'exemple 1.

Pour étudier l'effet de la durée du contact entre le ligand et le catalyseur sur les rendements d'extraction du Pd et du Pt par le dodécanethiol, on met en contact 0,25 g de catalyseur et 5mL de ligand à 60°C pendant des durées de 5, 24, 42 et 75 heures pour le palladium et pendant des durées de 5 heures et 72 heures pour le platine.

Les résultats de ces essais sont donnés sur la Figure 4.

On constate que, pour le palladium, le rendement d'extraction augmente avec la durée de contact et atteint un maximum pour une durée de contact de 42 heures.

Pour étudier l'effet de la température d'extraction sur les rendements d'extraction du Pd et du Pt par le dodécanethiol, on met en contact pendant 5h, 0,25g de catalyseur et 5mL de ligand à des températures de 25°C, 60°C, 80°C, 110°C et 150°C pour le palladium et à des températures de 60°C et 150°C pour le platine.

Les résultats de ces essais sont donnés sur la Figure 5.

On constate que, aussi bien pour le palladium que pour le platine, le rendement d'extraction augmente avec la durée de contact. Ainsi, pour le palladium, le rendement d'extraction peut atteindre 75% à 150°C tandis que l'augmentation du rendement d'extraction du platine par le dodécanethiol à haute température (150°C) est également démontrée sur la Figure 5.

On en conclut que les paramètres comme le temps de contact et la température d'extraction semblent grandement influencer l'extraction du Pd, mais aussi notamment en ce qui concerne la température, et plus particulièrement à haute température (150 °C), celle du Pt, par le dodécanethiol.

Exemple 3.

Dans cet exemple, on montre que l'extraction du métal par les ligands spécifiques mis en œuvre dans le procédé selon l'invention se fait sous forme réduite, c'est-à-dire sous la forme de nanoparticules de métal (0).

Les ligands présentant des groupements thiols mis en œuvre dans le procédé selon l'invention, tel que le dodécanethiol sont des ligands très mous qui complexent facilement les nanoparticules de métaux nobles.

La sélectivité élevée de ces ligands vis-à-vis des platinoïdes et notamment vis- à-vis du palladium par rapport à des ligands plus durs et plus ioniques tels que les ligands oxygénés de type phosphonates comme le Cyanex®272 est un premier indice de l'extraction d'une forme réduite de ces platinoïdes. On pourra à cet égard se référer à l'exemple 1 et à la Figure 3.

D'autre part, des particules en suspensions sont clairement visibles dans les fractions extraites au dodécanethiol à des températures supérieures à 110°C.

Ensuite, les Figures 7A et 7B, qui sont respectivement des clichés pris en microscopie électronique en transmission (MET) des suspensions de nanoparticules de Pd (Figure 7A) et de Pt (Figure 7B) dans le dodécanethiol obtenues en mettant en contact 0,25g de catalyseur et 5mL de ligand à 150°C pendant 5h, confirment bien la présence dans ces suspensions de nanoparticules de Pt ou de Pd d'une taille d'environ 3 nm, à savoir une taille des nanoparticules équivalente à la taille des nanoparticules de Pd ou Pt mesurée dans le catalyseur supporté.

Pour les suspensions obtenues par extraction à 60°C, les nanoparticules métalliques n'ont pas pu être observées au Microscope électronique en transmission.

On peut penser que, soit les particules sont plus fines, ou moins concentrées donc difficiles à visualiser, soit le métal est solubilisé dans le dodécanethiol comme pourrait le montrer la couleur différente de la solution obtenue par extraction à cette température.

Cependant, les spectres UV/Visible des solutions/suspensions de Pd (Figure 6) obtenues dans le dodécanethiol à différentes températures comparés au spectre d'une solution de Pd au degré d'oxydation II semblent démontrer la présence de Pd métal (0) et surtout l'absence de Pd II.

Exemple 4.

Dans cet exemple, on réalise des essais d'extraction dans lesquels le ligand, extractant est placé dans un milieu $CO_2$ supercritique.

Dans cet exemple, les essais sont réalisés en mode statique, afin de vérifier la faisabilité de l'extraction dans ce milieu supercritique et d'étudier les limitations potentielles dues à la solubilité du ligand dans le $CO_2$.

Le pilote utilisé qui est celui représenté sur la Figure 1 déjà décrit plus haut, est constitué d'une réserve liquide de $CO_2$, d'une pompe haute pression permettant de travailler jusqu'à 300 bar, et d'un réacteur en acier inoxydable de 0,5 L.

Le réacteur est un réacteur agité au moyen d'un agitateur fixé à l'extrémité inférieure d'une tige rotative.

Le réacteur est chauffé à l'aide d'un collier chauffant céramique et peut atteindre une température de 350°C. La dépressurisation du réacteur se fait via la ligne d'évent.

Le catalyseur et l'extractant, ligand sont tout d'abord introduits dans le réacteur.

Deux modes de réalisation sont, à cet égard, possibles :

(1) Le catalyseur et le ligand se trouvent tous les deux en contact direct au fond du réacteur, ou bien
(2) Le ligand se trouve au fond du réacteur, et le catalyseur se trouve dans un panier fixé à la tige de l'agitateur. Ce mode de réalisation évite ainsi le contact direct entre le ligand et le catalyseur et met en évidence la solubilisation du ligand dans le $CO_2$ supercritique.

Le réacteur est ensuite fermé, puis le $CO_2$ est ajouté et la température ajustée pour atteindre les conditions expérimentales voulues.

Dans cet exemple, les essais ont été réalisés à 250 bars et deux températures ont été étudiées, 60°C et 110°C pour chacun des modes de réalisation. Les conditions opératoires sont maintenues pendant 5h avant de dépressuriser le réacteur, de récupérer le catalyseur

et d'analyser la quantité de métal qu'il contient par digestion en milieu acide nitrique et analyse ICP-AES comme on l'a déjà décrit plus haut dans l'exemple 1.

Les essais effectués selon le mode de réalisation (1) en plongeant les billes de catalyseur dans le dodécanethiol en présence de $CO_2$ conduisent à des rendements d'extraction équivalents à ceux obtenus en bécher dans les mêmes conditions opératoires, à savoir 0,25g de catalyseur pour 5mL de ligand, pendant 5h à la même température. Ces rendements d'extraction R% sont en effet autour de 35% à 60°C et autour de 65% à 110°C. La présence de $CO_2$ n'empêche donc pas l'extraction (figure 8, barres de gauche A et B).

Les mêmes essais réalisés selon le mode de réalisation (2), en milieu $CO_2$ supercritique, sans contact direct des billes de catalyseur avec le ligand, conduisent également à l'extraction des particules métalliques, prouvant ainsi la solubilité du dodécanethiol dans le $CO_2$.

Cependant, le rendement d'extraction est diminué par rapport à celui obtenu lorsque le catalyseur et le ligand se trouvent en contact direct selon le mode de réalisation (1). En effet, R% se situe alors autour de 10% à 60°C et autour de 35% à 110°C (barres de droite C et D). Cette diminution du rendement d'extraction est due à la faible surface d'échange dans le mode de réalisation (2).

Exemple 5.

Dans cet exemple, tout comme dans l'exemple 4, on réalise des essais d'extraction dans lesquels le ligand, extractant est placé dans un milieu $CO_2$ supercritique.

Mais dans cet exemple les essais sont réalisés en mode dynamique, dans des conditions dynamiques afin de favoriser le contact entre le ligand et le catalyseur et ainsi améliorer les rendements d'extraction.

L'installation expérimentale utilisée pour ces essais est analogue à celle représentée sur la Figure 2 déjà décrite plus haut. Elle est constituée des éléments principaux suivants :

- une pompe à $CO_2$ avec refroidissement par effet Peltier, débit : 0,001 à 10 $ml.min^{-1}$ ;
- un réacteur de solubilisation du ligand de 35mL, pression maximale admissible : 50 MPa, température maximale 300°C;
- un réacteur d'extraction de 60mL permettant la mise en contact du ligand et du catalyseur jusqu'à une pression de 35 MPa - 150°C ;
- un récipient de collecte de 50 mL permettant la récupération des complexes métalliques.

Le ligand est introduit dans le réacteur de solubilisation et le catalyseur supporté constitué par des particules métalliques dispersées sur un support poreux est introduit dans le réacteur d'extraction.

Le flux de $CO_2$ passe à travers le premier réacteur, entraînant le ligand qui est ensuite mis en contact avec le catalyseur dans le second réacteur. Le complexe formé est ensuite entraîné et récupéré dans le récipient de collecte. Les essais en mode dynamique ont été réalisés à 60°C et 250 bar.

La Figure 9 montre l'effet du débit de $CO_2$ sur le rendement d'extraction du Pd supporté sur un support d'alumine pour une extraction réalisée avec du dodécanethiol en milieu $CO_2$ supercritique en mode dynamique pendant une durée de 3h à 250 bar et 60°C.

Cette figure 9 montre la nécessité de travailler à de faibles débits pour favoriser la solubilisation du ligand dans le $CO_2$ et le contact ligand/catalyseur en augmentant le temps de séjour du ligand dans le réacteur d'extraction.

Tous les essais suivants ont donc été réalisés à un débit de $CO_2$ de 0,5mL/min.

La cinétique d'extraction du Pd par le dodécanethiol, à 60°C et 250 bar et un débit de 0,5L/min, a ensuite été déterminée (Figure 10).

Le rendement d'extraction du Pd au bout de 5h de traitement dans ces conditions est équivalent à celui obtenu pour une durée d'extraction de 5h à 60°C en bécher, et se situe autour de 35%.

Pour le Pt, le rendement d'extraction par le dodécanethiol dans le $CO_2$ supercritique est également équivalent à celui déterminé pour une durée d'extraction de 5h à 60°C en bécher, et se situe autour de 20%.

Pour illustrer l'effet des conditions opératoires, différents taux de remplissage du réacteur d'extraction avec les billes de catalyseur supporté ont été testés.

Ainsi, soit 2g, soit 10g de catalyseur supporté sont introduits dans le réacteur d'extraction, pour la même quantité de ligand mise en œuvre.

En augmentant la quantité de matière à traiter, le rendement diminue mais la masse de métal extrait est quant à elle plus importante comme le montre la Figure 11.

Ce résultat semble montrer que le ligand n'est pas saturé en métal lors de son passage à travers la colonne de bille de catalyseur.

**Revendications**

1. Procédé d'extraction sélectif d'un métal choisi parmi les métaux de la famille des platinoïdes, tels que le platine, le palladium, le rhodium, et le ruthénium ; l'or; l'argent ; et leurs alliages et mélanges, à partir d'un support en céramique contenant ledit métal, comprenant les étapes successives suivantes :

   a) on met en contact, dans une enceinte d'extraction, ledit support en céramique contenant ledit métal avec un milieu d'extraction constitué par un fluide dense sous pression et un ligand organique qui est sélectif du métal et qui est capable de former un complexe avec ledit métal à

l'état 0; moyennant quoi le complexe avec ledit métal à l'état 0 est formé, et on obtient d'une part un support en céramique appauvri en ledit métal, voire exempt dudit métal, et d'autre part un milieu constitué par le fluide dense sous pression contenant le complexe du ligand organique avec le métal à l'état 0 ;

b) on ramène ledit fluide dense sous pression contenant le complexe du ligand organique avec le métal à l'état 0 à la pression atmosphérique et à la température ambiante, moyennant quoi le complexe du ligand organique avec le métal à l'état 0 se sépare du fluide;

c) on récupère le support en céramique appauvri en ledit métal, voire exempt dudit métal, et le complexe du ligand organique avec le métal à l'état 0 ;

**caractérisé en ce que**
le ligand organique sélectif du métal est choisi parmi les thiols de formule RSH, dans laquelle R représente un groupe alkyle linéaire ou ramifié de 1 à 20 C, de préférence de 1 à 12 C, de préférence encore de 1 à 10 C, par exemple le ligand organique sélectif du métal est le dodécanethiol.

**2.** Procédé selon la revendication 1, dans lequel le métal est sous la forme de nanoparticules dispersées sur au moins une surface externe du support en céramique et le métal est extrait sous la forme de nanoparticules du métal à l'état métallique (0).

**3.** Procédé selon l'une quelconque des revendications précédentes, dans lequel le fluide est choisi parmi le dioxyde de carbone ; l'hélium ; le xénon ; l'azote ; le protoxyde d'azote ; l'hexafluorure de soufre ; les alcanes gazeux de 1 à 5 atomes de carbone tels que le méthane, l'éthane, les propanes, le n-butane, l'isobutane, et le néopentane ; les hydrocarbures fluorés gazeux ; les hydrocarbures gazeux chlorés et/ou fluorés, par exemple, les hydrogénochlorofluorocarbures, dits HCFC, ou leurs substituts, dans le cadre de la législation en cours ; l'ammoniac; et leurs mélanges.

**4.** Procédé selon l'une quelconque des revendications précédentes, dans lequel le fluide dense sous pression, tel que du $CO_2$, est à une pression de 50 à 700 bar, et à une température de 15°C à 200°C, par exemple à une pression de 250 bar et à une température de 60°C à 110°C.

**5.** Procédé selon l'une quelconque des revendications précédentes, dans lequel le fluide dense sous pression est à l'état de liquide, de gaz dense, ou à l'état supercritique.

**6.** Procédé selon l'une quelconque des revendications précédentes, dans lequel le ligand organique sélectif du métal représente de 1 à 20 % en masse du milieu d'extraction.

**7.** Procédé selon l'une quelconque des revendications précédentes, dans lequel, simultanément à la mise en contact on soumet le support et/ou le milieu d'extraction à une action mécanique ; de préférence, l'action mécanique est choisie parmi une ou plusieurs parmi une agitation, une turbulence, un cisaillement, une action électromécanique et une action ultrasonique.

**8.** Procédé selon l'une quelconque des revendications précédentes, qui comprend en outre, à l'issue de l'étape c), une étape d) au cours de laquelle le métal est récupéré à partir du complexe, par exemple par traitement thermique du complexe.

**9.** Procédé selon l'une quelconque des revendications précédentes, qui est réalisé en mode statique, et qui comprend en outre préalablement à l'étape a) une étape a1) :

a1) on place le support en céramique contenant le métal et le ligand organique sélectif du métal et capable de former un complexe avec ledit métal à l'état 0, dans l'enceinte d'extraction, puis on introduit le fluide dans l'enceinte d'extraction, et on établit dans l'enceinte d'extraction une température et une pression telles que le fluide soit dense et sous pression ;

et dans lequel, lors de l'étape b), la pression dans l'enceinte d'extraction est ramenée à la pression atmosphérique, la température est ramenée à la température ambiante, le fluide est évacué de l'enceinte d'extraction sous forme d'un courant de gaz, le complexe est entraîné avec le courant de gaz, et éventuellement le complexe est récupéré dans un séparateur placé à la sortie de l'enceinte d'extraction .

**10.** Procédé selon la revendication 9, dans lequel lors de l'étape a) le support en céramique contenant le métal est mis en contact avec le milieu d'extraction pendant une durée de 1 à 24 heures.

**11.** Procédé selon la revendication 9 ou la revendication 10, dans lequel la proportion en masse du support en céramique contenant le métal par rapport au volume de ligand organique sélectif est de 0,01 g/mL à 0,5 g/mL, par exemple de 0,25 g/ mL.

**12.** Procédé selon l'une quelconque des revendications 9 à 11, dans lequel lors de l'étape a1) on place le support en céramique contenant ledit métal et le ligand organique sélectif dans l'enceinte d'extraction de façon à ce que le support en céramique contenant le métal et le ligand organique sélectif soient en contact direct, ou bien, lors de l'étape a1) on place le support en céramique contenant ledit métal et le ligand organique sélectif dans l'enceinte de façon à ce que le support en céramique contenant le métal et le ligand organique sélectif ne soient pas en contact direct.

**13.** Procédé selon l'une quelconque des revendications 1 à 8, qui est réalisé en mode dynamique, et qui comprend en outre préalablement à l'étape a), les étapes a2), a3) et a4) :

a2) on place le ligand organique sélectif dans une enceinte de solubilisation en communication fluidique avec l'enceinte d'extraction, et on place le support en céramique contenant le métal dans l'enceinte d'extraction ; puis
a3) on envoie en continu un courant de fluide dense sous pression dans l'enceinte de solubilisation, moyennant quoi on obtient le milieu d'extraction constitué par le fluide dense sous pression et le ligand organique sélectif;
a4) on envoie en continu un courant du milieu d'extraction dans l'enceinte d'extraction ;

et dans lequel à l'issue de l'étape a), un courant du fluide dense sous pression contenant le complexe du ligand organique avec le métal à l'état 0 est soutiré dans l'enceinte d'extraction et envoyé dans un réservoir où sont réalisées les étapes b) puis c).

**14.** Procédé selon la revendication 13, dans lequel, lors de l'étape b), la pression dans le réservoir est ramenée à la pression atmosphérique, la température est ramenée à la température ambiante et le fluide est évacué du réservoir sous forme de gaz tandis que le complexe du ligand organique avec le métal à l'état 0 reste dans le réservoir

**Patentansprüche**

**1.** Verfahren zur selektiven Extraktion eines Metalls, ausgewählt aus Metallen der Familie der Platinoiden, wie Platin, Palladium, Rhodium, und Ruthenium; Gold; Silber; und deren Legierungen und Gemischen, aus einem keramischen Träger, der dieses Metall enthält, umfassend die nachstehenden, aufeinanderfolgenden Schritte:

a) der das Metall enthaltende keramische Träger wird in einer Extraktionskammer mit einem Extraktionsmedium in Kontakt gebracht, das aus einem dichten Fluid unter Druck und einem metallselektiven organischen Liganden besteht, der mit dem Metall im Zustand 0 einen Komplex bilden kann; wodurch der Komplex mit dem Metall im Zustand 0 gebildet wird, und einerseits ein an dem Metall verarmter bzw. metallfreier keramischer Träger und andererseits ein Medium erhalten wird, das aus dem dichten Fluid unter Druck besteht, das den Komplex des organischen Liganden mit dem Metall im Zustand 0 enthält;
b) das dichte Fluid unter Druck, das den Komplex des organischen Liganden mit dem Metall im Zustand 0 enthält, wird auf Atmosphärendruck und auf Raumtemperatur zurückgebracht, wodurch sich der Komplex des organischen Liganden mit dem Metall im Zustand 0 von dem Fluid trennt;
c) der an dem Metall verarmte bzw. metallfreie keramische Träger und der Komplex des organischen Liganden mit dem Metall im Zustand 0 werden gewonnen,

**dadurch gekennzeichnet, dass**
der metallselektive organische Ligand ausgewählt ist aus Thiolen der Formel RSH, wobei R eine lineare oder verzweigte Alkylgruppe von 1 bis 20 C, vorzugsweise von 1 bis 12 C, besonders bevorzugt von 1 bis 10 C, darstellt, wobei der metallselektive organische Ligand beispielsweise Dodecanethiol ist.

**2.** Verfahren nach Anspruch 1, wobei das Metall in Form von Nanopartikeln vorliegt, die auf mindestens einer äußeren Oberfläche des keramischen Trägers dispergiert sind, und das Metall in Form von Nanopartikeln aus dem Metall im metallischen Zustand (0) extrahiert wird.

**3.** Verfahren nach einem der vorhergehenden Ansprüche, wobei das Fluid ausgewählt ist aus Kohlendioxid; Helium; Xenon; Stickstoff; Distickstoffmonoxid; Schwefelhexafluorid; gasförmigen Alkanen mit 1 bis 5 Kohlenstoffatomen wie Methan, Ethan, Propane, n-Butan, Isobutan und Neopentan ; fluorierten gasförmigen Kohlenwasserstoffen; chlorierten und/oder fluorierten gasförmigen Kohlenwasserstoffen, beispielsweise Fluorchlorkohlenwasserstoffen, FCKW genannt, oder deren Ersatzstoffen nach den geltenden Rechtsvorschriften; Ammoniak; und deren Gemischen.

**4.** Verfahren nach einem der vorhergehenden Ansprüche, wobei das dichte Fluid unter Druck, wie $CO_2$, bei einem Druck von 50 bis 700 bar und einer Temperatur von 15 °C bis 200 °C, beispielsweise bei einem Druck von 250 bar und einer Temperatur von 60 °C bis 110 °C, vorliegt.

**5.** Verfahren nach einem der vorhergehenden Ansprüche, wobei das dichte Fluid unter Druck im Zustand einer Flüssigkeit, eines dichten Gases oder im überkritischen Zustand vorliegt.

**6.** Verfahren nach einem der vorhergehenden Ansprüche, wobei der metallselektive organische Ligand 1

bis 20 Masse-% des Extraktionsmediums ausmacht.

7. Verfahren nach einem der vorhergehenden Ansprüche, wobei gleichzeitig mit dem Inkontaktbringen der Träger und/oder das Extraktionsmedium einer mechanischen Einwirkung unterworfen wird; wobei vorzugsweise die mechanische Einwirkung ausgewählt ist aus einem oder mehreren Vorgängen aus Rühren, Verwirbeln, Scheren, elektromechanischer Einwirkung und Ultraschall-Einwirkung.

8. Verfahren nach einem der vorhergehenden Ansprüche, das ferner am Ende von Schritt c) einen Schritt d) umfasst, bei dem Metall aus dem Komplex, beispielsweise durch Wärmebehandlung des Komplexes, gewonnen wird.

9. Verfahren nach einem der vorhergehenden Ansprüche, das im statischen Modus durchgeführt wird, und das ferner vor Schritt a) einen Schritt a1) umfasst:
a1) der keramische Träger, der das Metall und den metallselektiven organischen Liganden, der mit dem Metall im Zustand 0 einen Komplex bilden kann, enthält, wird in die Extraktionskammer eingebracht, dann wird das Fluid in die Extraktionskammer eingebracht und eine Temperatur und ein Druck werden in der Extraktionskammer so eingestellt, dass das Fluid dicht ist und unter Druck steht;
und wobei in Schritt b) der Druck in der Extraktionskammer auf Atmosphärendruck gebracht wird, die Temperatur auf Umgebungstemperatur gebracht wird, das Fluid aus der Extraktionskammer als Gasstrom abgeführt wird, der Komplex mit dem Gasstrom mitgerissen wird und gegebenenfalls der Komplex in einem am Auslass der Extraktionskammer angeordneten Separator gewonnen wird.

10. Verfahren nach Anspruch 9, wobei in Schritt a) der das Metall enthaltende keramische Träger für einen Zeitraum von 1 bis 24 Stunden mit dem Extraktionsmedium in Kontakt gebracht wird.

11. Verfahren nach Anspruch 9 oder Anspruch 10, wobei das Massenverhältnis des das Metall enthaltenden keramischen Trägers zum Volumen des selektiven organischen Liganden 0,01 g/mL bis 0,5 g/mL, beispielsweise 0,25 g/mL, beträgt.

12. Verfahren nach einem der Ansprüche 9 bis 11, wobei in Schritt a1) der das Metall enthaltende keramische Träger und der selektive organische Ligand so in der Extraktionskammer angeordnet werden, dass der das Metall enthaltende keramische Träger und der selektive organische Ligand in direktem Kontakt stehen, oder wobei in Schritt a1) der das Metall enthaltende keramische Träger und der selektive organische Ligand so in der Kammer angeordnet werden, dass der das Metall enthaltende keramische Träger und der selektive organische Ligand nicht in direktem Kontakt stehen.

13. Verfahren nach einem der Ansprüche 1 bis 8, das im dynamischen Modus durchgeführt wird, und das ferner vor Schritt a) die Schritte a2), a3) und a4) umfasst:

a2) der selektive organische Ligand wird in eine Solubilisierungskammer, die in Fluidverbindung mit der Extraktionskammer steht, eingebracht, und der das Metall enthaltende keramische Träger wird in die Extraktionskammer eingebracht;
a3) ein Strom von unter Druck stehendem dichtem Fluid wird kontinuierlich in die Solubilisierungskammer eingeleitet, wodurch das Extraktionsmedium, das aus dem unter Druck stehenden dichten Fluid und dem selektiven organischen Liganden besteht, gewonnen wird;
a4) ein Strom des Extraktionsmediums wird kontinuierlich in die Extraktionskammer geleitet;

und wobei am Ende von Schritt a) ein Strom von dichtem, unter Druck stehendem Fluid, das den Komplex aus dem organischen Liganden mit dem Metall im Zustand 0 enthält, aus der Extraktionskammer abgezapft und einem Reservoir zugeführt wird, wo die Schritte b) und dann c) erfolgen.

14. Verfahren nach Anspruch 13, wobei in Schritt b) der Druck im Reservoir auf Atmosphärendruck gebracht wird, die Temperatur auf Raumtemperatur gebracht wird und das Fluid als Gas aus dem Reservoir abgeführt wird, während der Komplex des organischen Liganden mit dem Metall im Zustand 0 im Reservoir verbleibt.

## Claims

1. Method of selective extraction of a metal of the family of platinoids, such as platinum, palladium, rhodium, and ruthenium; gold; silver; and their alloys and mixtures, from a ceramic support containing said metal, comprising the following successive steps:

a) said ceramic support containing said metal is brought into contact, in an extraction chamber, with an extraction medium consisting of a pressurized dense fluid and an organic ligand that is selective for the metal and that is capable of forming a complex with said metal in the 0 state; whereby the complex with said metal in the 0 state is formed, and are obtained, on the one hand, a ceramic support depleted in said metal, or even free of said metal, and, on the other hand, a medium consisting of the pressurized dense fluid containing the complex of the organic ligand with the metal in the 0 state;
b) said pressurized dense fluid containing the complex of the organic ligand with the metal in the 0 state is brought back to atmospheric pressure and to ambient temperature, whereby the complex of the organic ligand with the metal in the 0 state separates from the fluid;
c) the ceramic support depleted in said metal, or even free of said metal, and the complex of the organic ligand with the metal in the 0 state, are recovered;

**characterized in that**
the organic ligand that is selective for the metal is selected from thiols of formula RSH, in which R represents a linear or branched alkyl group of 1 to 20 C, preferably of 1 to 12 C, still preferably of 1 to 10 C, for example the organic ligand that is selective for the metal is dodecanethiol.

**2.** Method according to claim 1, wherein the metal is in the form of nanoparticles dispersed on at least one external surface of the ceramic support and the metal is extracted in the form of nanoparticles of the metal in the (0) metal state.

**3.** Method according to any one of the preceding claims, wherein the fluid is selected from carbon dioxide; helium; xenon; nitrogen; nitrous oxide; sulphur hexafluoride; gaseous alkanes of 1 to 5 carbon atoms such as methane, ethane, propanes, n-butane, isobutane, and neopentane; gaseous fluorinated hydrocarbons; gaseous chlorinated and/or fluorinated hydrocarbons, for example, hydrochlorofluorocarbons, known as HCFCs, or substitutes thereof, within the framework of current legislation; ammonia; and mixtures thereof.

**4.** Method according to any one of the preceding claims, wherein the pressurized dense fluid, such as $CO_2$, is at a pressure of 50 to 700 bars, and at a temperature from 15°C to 200°C, for example at a pressure of 250 bars and at a temperature from 60°C to 110°C.

**5.** Method according to any one of the preceding claims, wherein the pressurized dense fluid is in the liquid state, dense gas state, or in the supercritical state.

**6.** Method according to any one of the preceding claims, wherein the organic ligand that is selective for the metal represents from 1 to 20 % by weight of the extraction medium.

**7.** Method according to any one of the preceding claims, wherein, simultaneously to being brought into contact, the support and/or the extraction medium are subjected to a mechanical action; preferably, the mechanical action is selected from one or more among an agitation, a turbulence, a shear, an electromechanical action and an ultrasonic action.

**8.** Method according to any one of the preceding claims, which further comprises, at the end of step c), a step d) during which the metal is recovered from the complex, for example by thermal treatment of the complex.

**9.** Method according to any one of the preceding claims, which is carried out in static mode, and which further comprises, prior to step a), a step a1):
a1) the ceramic support containing the metal and the organic ligand that is selective for the metal and that is capable of forming a complex with said metal in the 0 state, are placed in the extraction chamber, then the fluid is introduced into the extraction chamber, and a temperature and a pressure are established in the extraction chamber such that the fluid is dense and pressurized;
and wherein, during step b), the pressure in the extraction chamber is brought back to atmospheric pressure, the temperature is brought back to ambient temperature, the fluid is evacuated from the extraction chamber in the form of a stream of gas, the complex is carried away with the stream of gas, and optionally the complex is recovered in a separator placed at the outlet of the extraction chamber.

**10.** Method according to claim 9, wherein during step a) the ceramic support containing the metal is brought into contact with the extraction medium for a duration of 1 to 24 hours.

**11.** Method according to claim 9 or claim 10, wherein the proportion by weight of the ceramic support containing the metal compared to the volume of selective organic ligand is 0.01 g/mL to 0.5 g/mL, for example 0.25 g/mL.

**12.** Method according to any one of claims 9 to 11, wherein during step a1) the ceramic support containing said metal and the selective organic ligand are placed in the extraction chamber in such a way that the ceramic support containing the metal and the selective organic ligand are in direct contact, or else, during step a1) the ceramic support containing said metal and the selective organic ligand are placed in the chamber in such a way that the ceramic support containing the metal and the selective organic ligand are not in direct contact.

**13.** Method according to any one of claims 1 to 8, which is carried out in dynamic mode, and which further comprises, prior to step a), steps a2), a3) and a4):

a2) the selective organic ligand is placed in a solubilisation chamber in fluidic communication with the extraction chamber, and the ceramic support containing the metal is placed in the extraction chamber; then

a3) a stream of pressurized dense fluid is sent continuously into the solubilisation chamber, whereby is obtained the extraction medium consisting of the pressurized dense fluid containing a selective organic ligand;

a4) a stream of the extraction medium is sent continuously into the extraction chamber;

and wherein, at the end of step a), a stream of the pressurized dense fluid containing the complex of the organic ligand with the metal in the 0 state is drawn off from the extraction chamber and sent into a reservoir in which steps b) then c) are carried out.

**14.** Method according to claim 13, wherein, during step b), the pressure in the reservoir is brought back to atmospheric pressure, the temperature is brought back to ambient temperature and the fluid is evacuated from the reservoir in the form of a gas whereas the complex of the organic ligand with the metal in the 0 state remains in the reservoir.

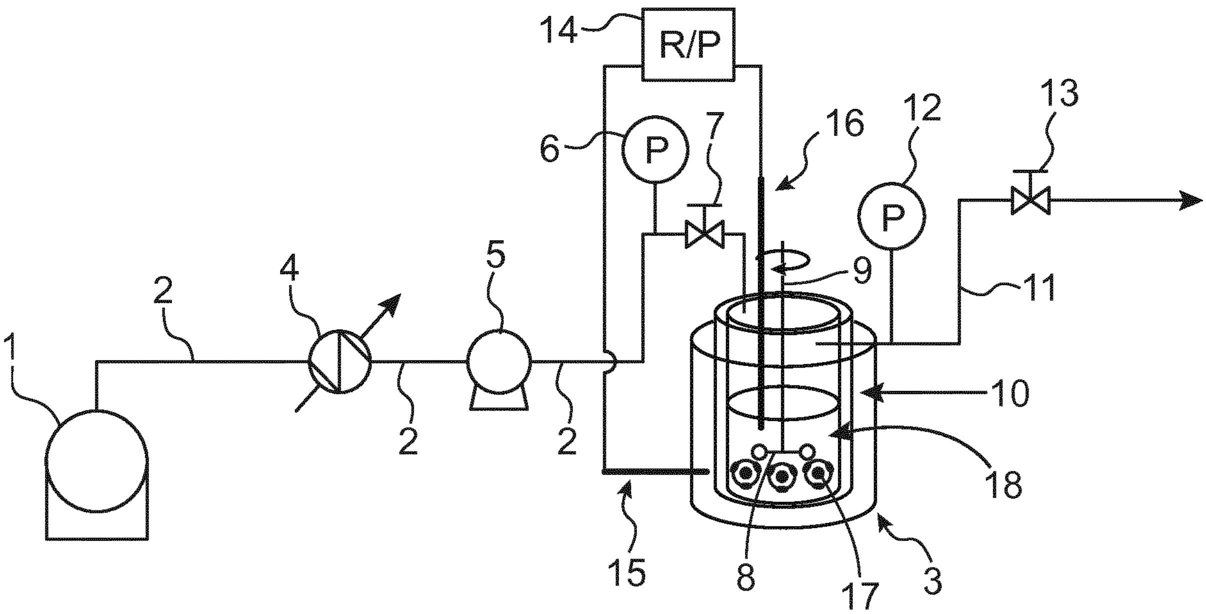


FIG.1

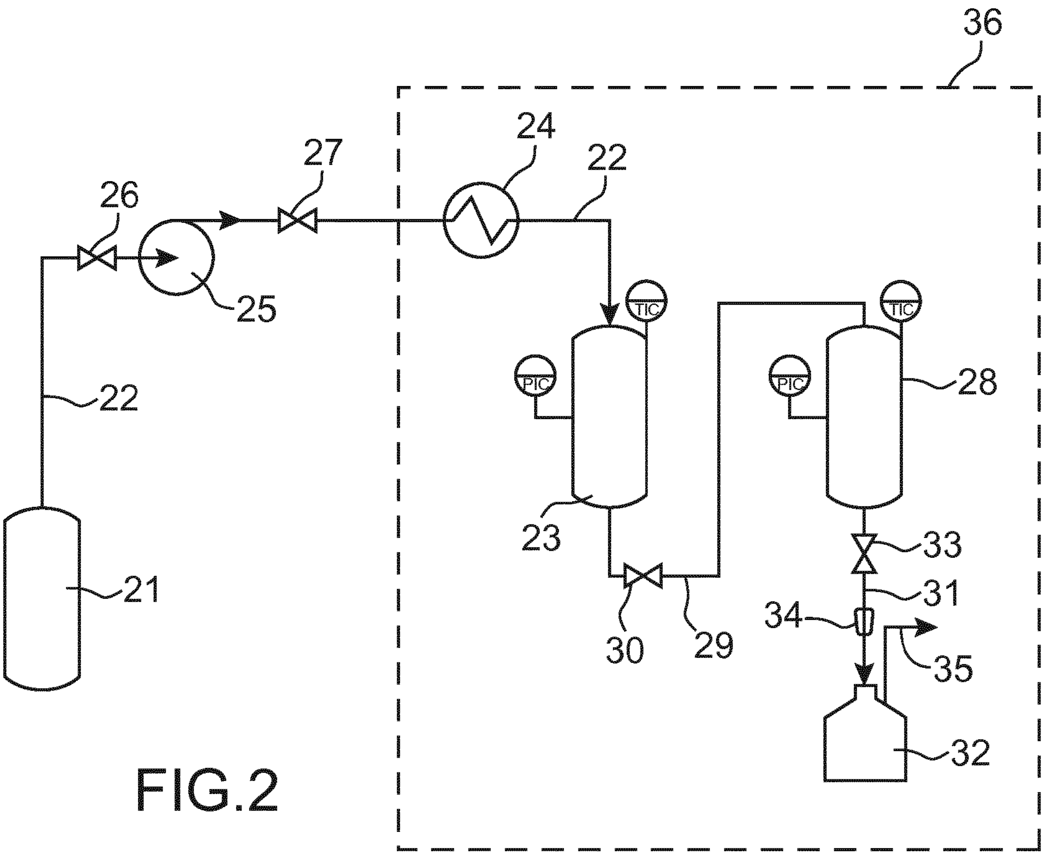
36
24
27
22
26
25
TIC
PIC
28
22
23
21
33
31
34
30
29
35
32

FIG.2

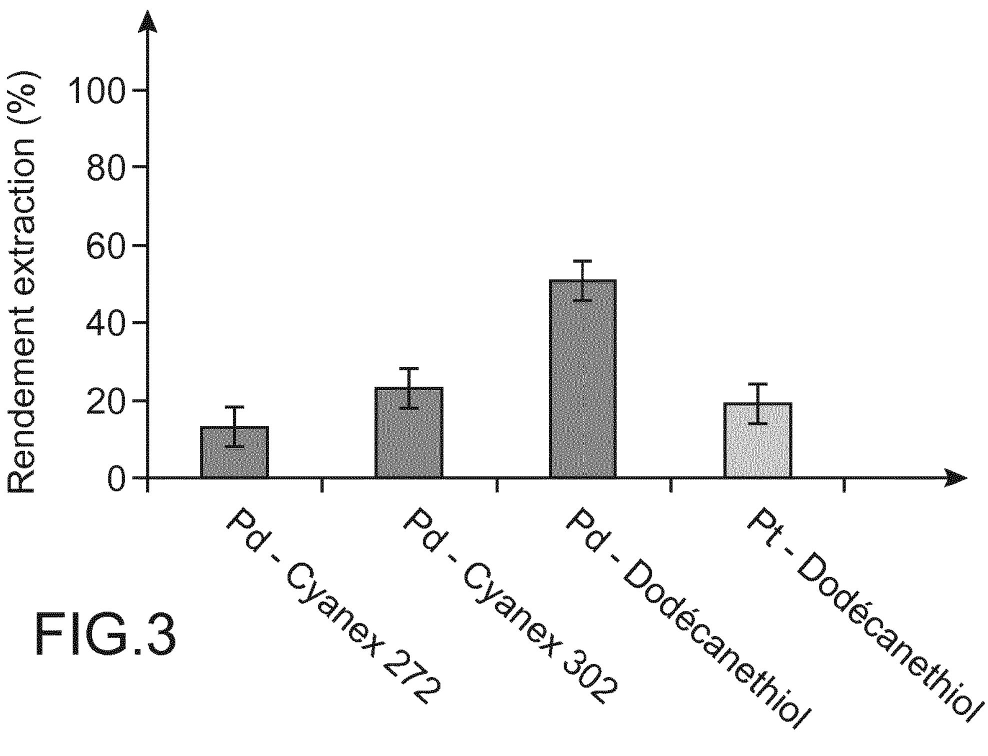
Rendement extraction (%)
100
80
60
40
20
0
Pd - Cyanex 272
Pd - Cyanex 302
Pd - Dodécanethiol
Pt - Dodécanethiol

FIG.3

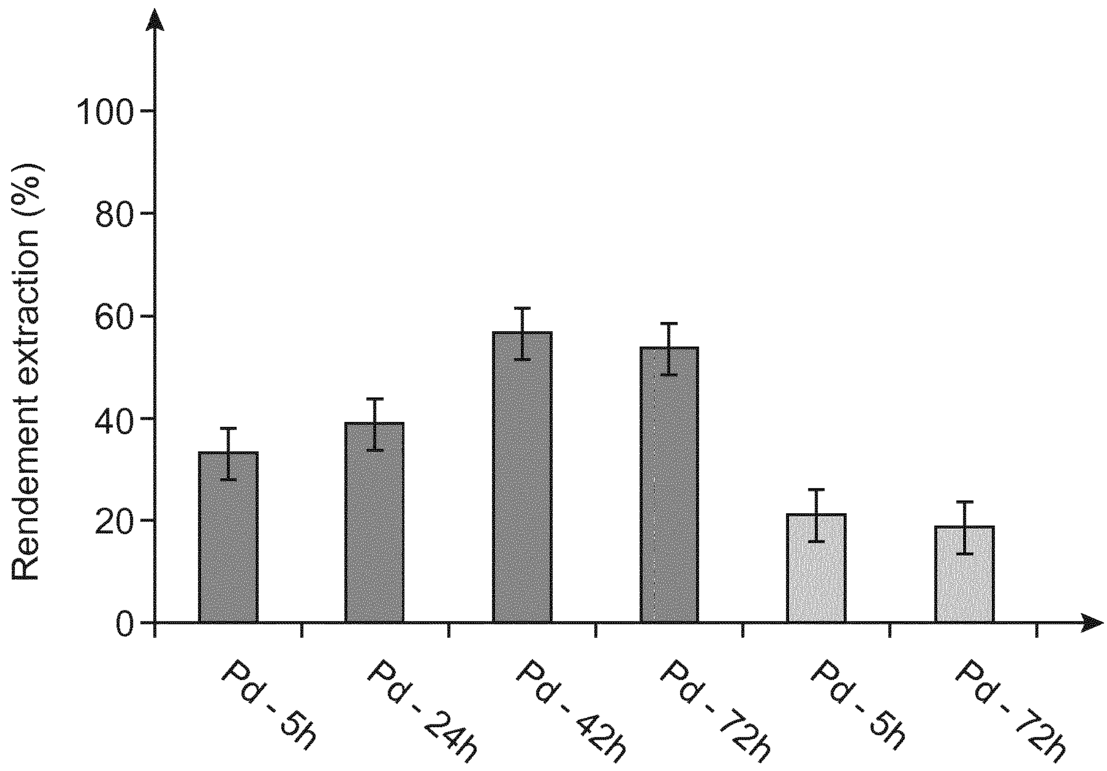
Rendement extraction (%)
100
80
60
40
20
0
Pd - 5h
Pd - 24h
Pd - 42h
Pd - 72h
Pd - 5h
Pd - 72h

FIG.4

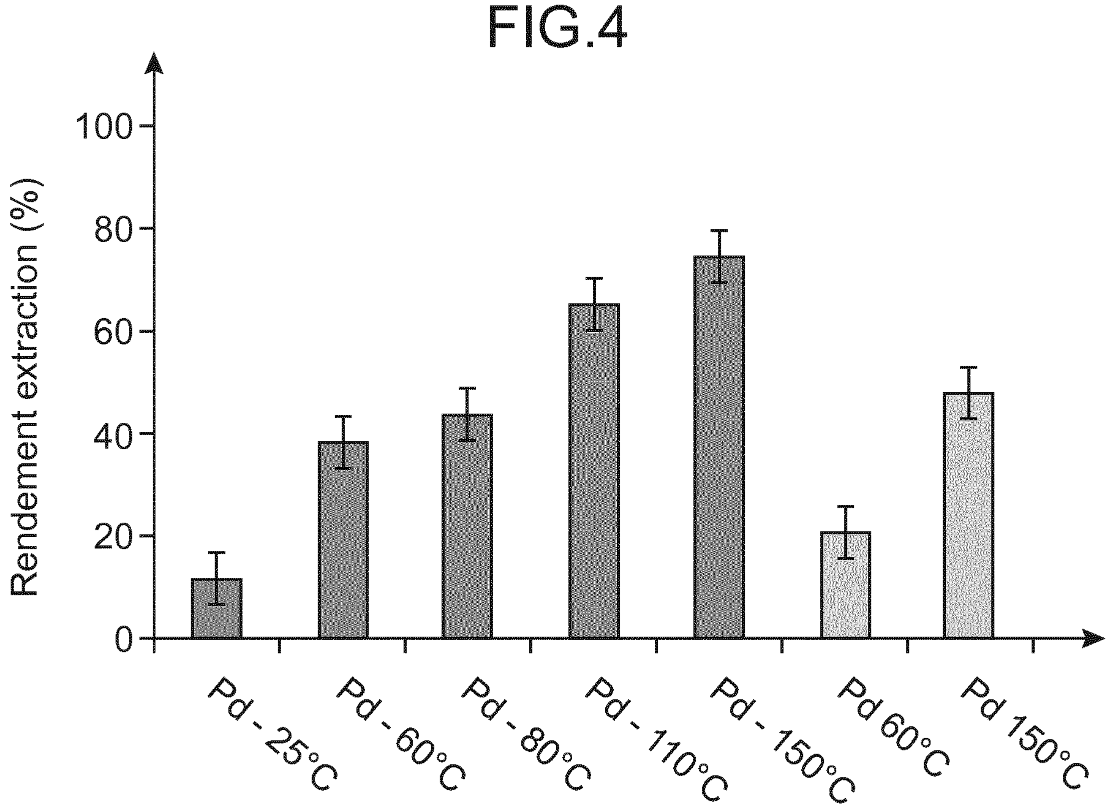
Rendement extraction (%)
100
80
60
40
20
0
Pd - 25°C
Pd - 60°C
Pd - 80°C
Pd - 110°C
Pd - 150°C
Pd 60°C
Pd 150°C

FIG.5

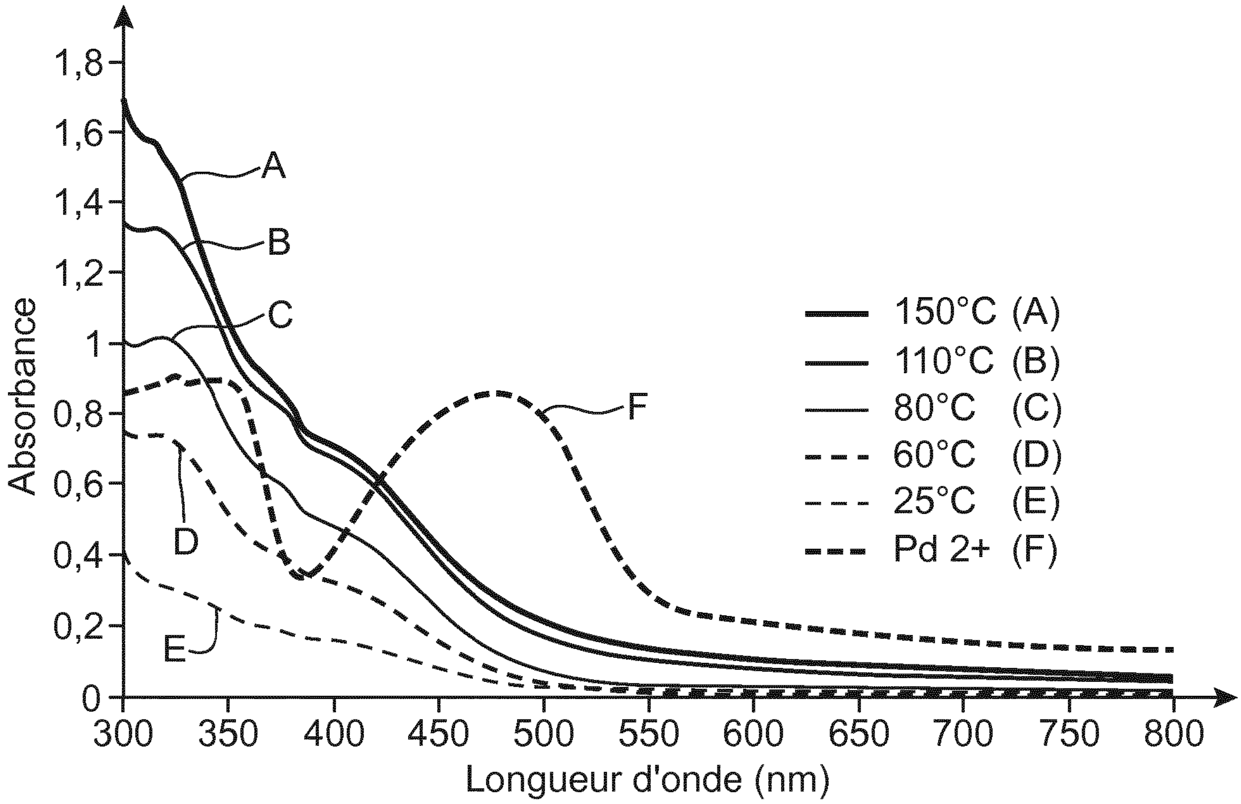
Absorbance
1,8
1,6
1,4
1,2
1
0,8
0,6
0,4
0,2
0
300 350 400 450 500 550 600 650 700 750 800
Longueur d'onde (nm)
A
B
C
D
E
F
150°C (A)
110°C (B)
80°C (C)
60°C (D)
25°C (E)
Pd 2+ (F)

FIG.6

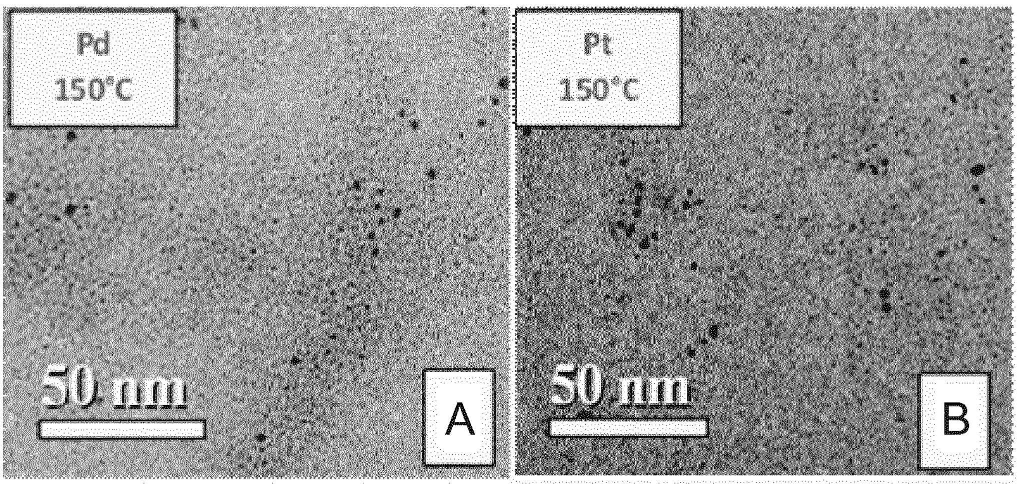
Pd
150°C
50 nm
A
Pt
150°C
50 nm
B

FIG.7

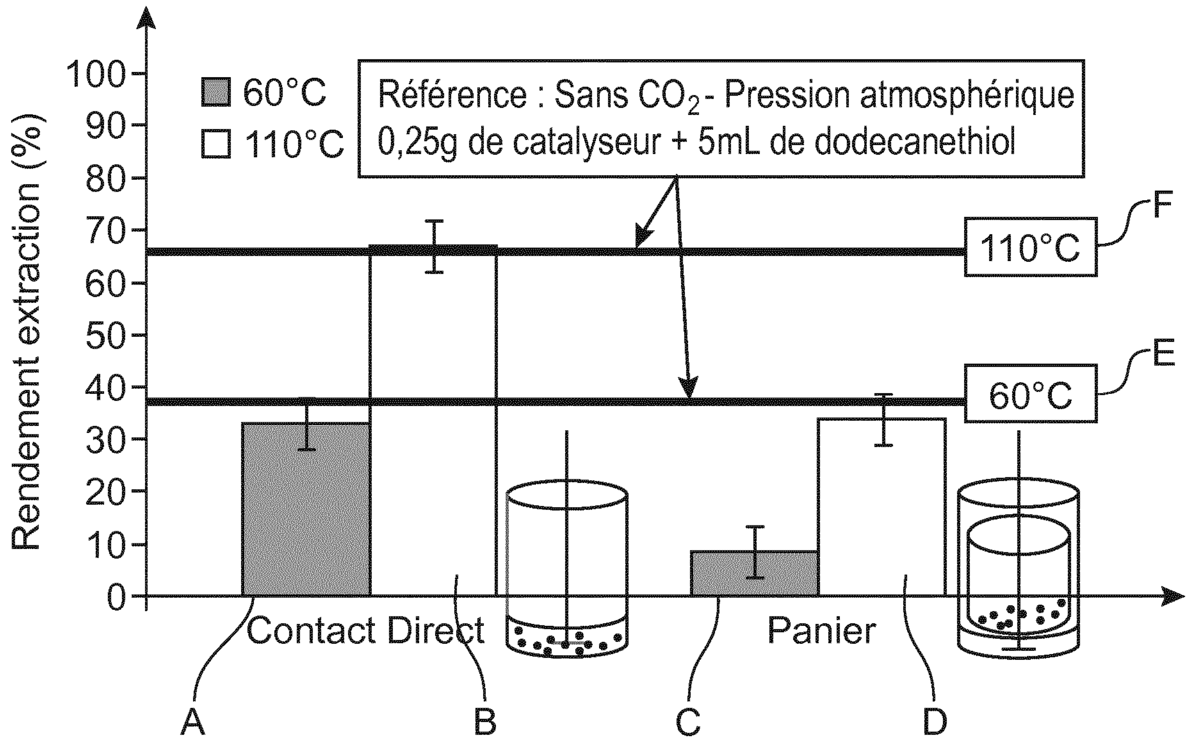
Rendement extraction (%)
100
90
80
70
60
50
40
30
20
10
0
60°C
110°C
Référence : Sans $CO_2$ - Pression atmosphérique
0,25g de catalyseur + 5mL de dodecanethiol
110°C
60°C
F
E
Contact Direct
Panier
A
B
C
D

FIG.8

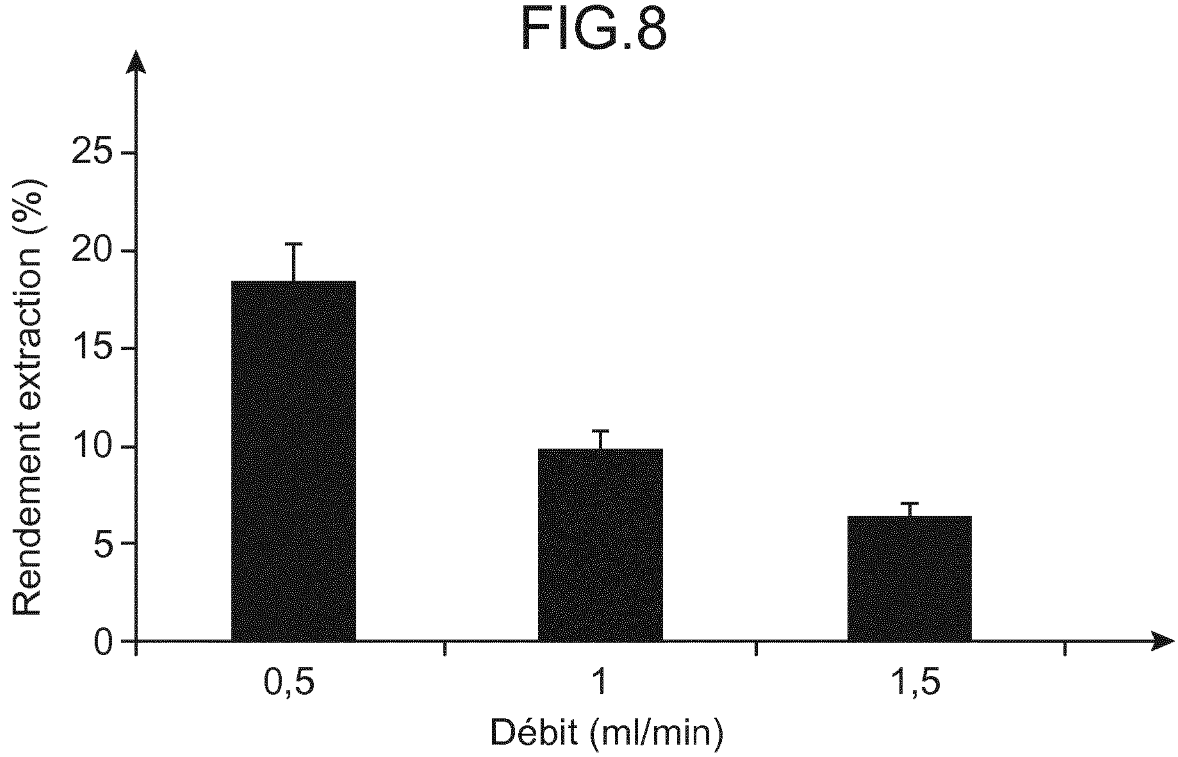
Rendement extraction (%)
25
20
15
10
5
0
0,5
1
1,5
Débit (ml/min)

FIG.9

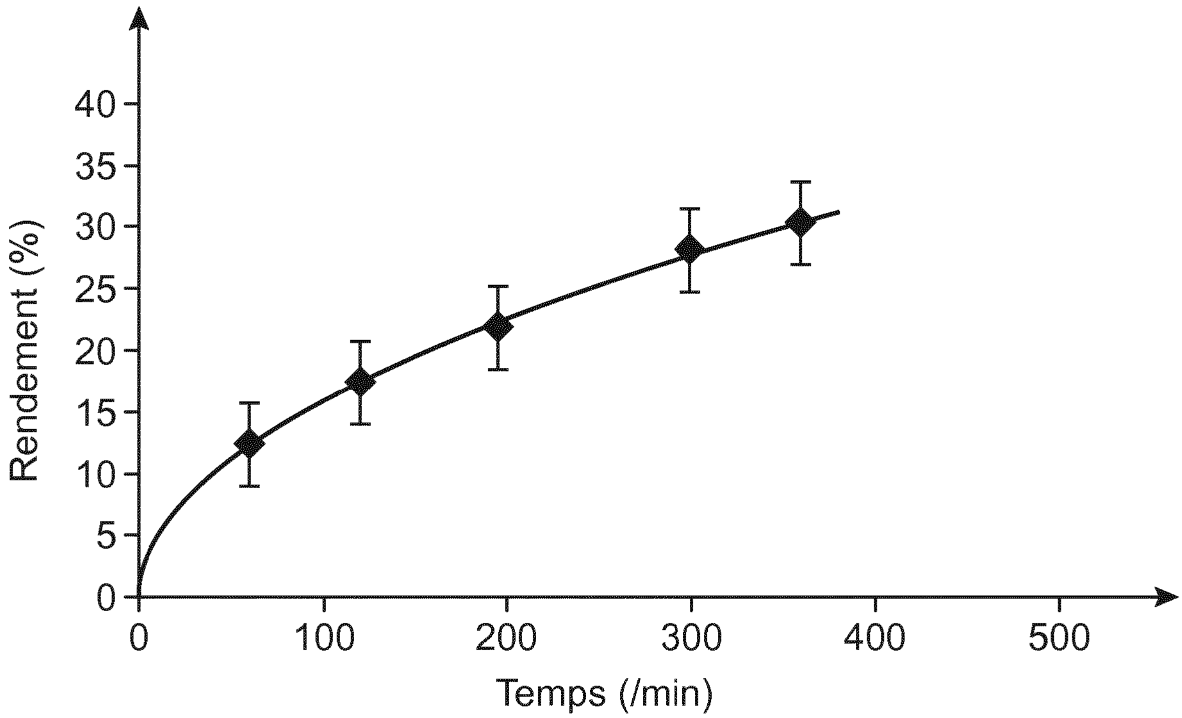
Rendement (%)
40
35
30
25
20
15
10
5
0
0
100
200
300
400
500
Temps (/min)

FIG.10

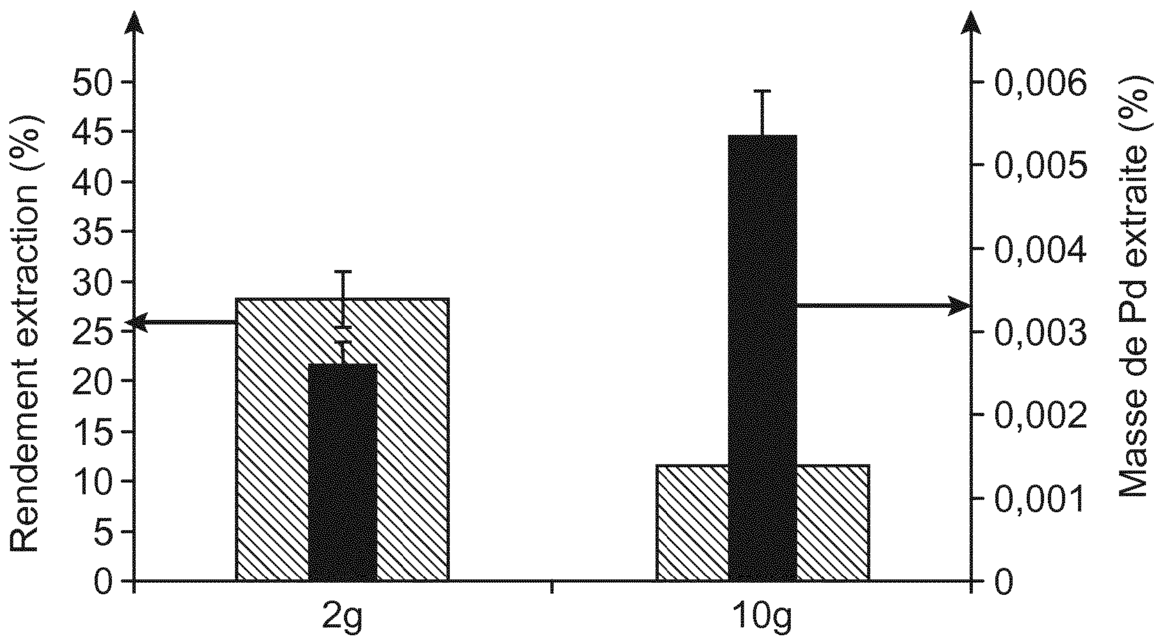
Rendement extraction (%)
50
45
40
35
30
25
20
15
10
5
0
2g
10g
0,006
0,005
0,004
0,003
0,002
0,001
0
Masse de Pd extraite (%)

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2003183043 A
- US 5641887 A


### Littérature non-brevet citée dans la description


- **S. IWAO ; S.A. EL-FATAH ; K. FURUKAWA ; T. SEKI ; M. SASAKI ; M. GOTO.** Recovery of palladium from spent catalyst with supercritical CO2 and chelating agent. *J. of Supercritical Fluids,* 2007, vol. 42, 200-204
- **O. ASCHENBRENNER ; S. KEMPER ; E. DINJUS ; N. DAHMEN ; K. SCHABER.** Solubility of β-diketonates, cyclopentadienyls, and cyclooctadiene complexes with various metals in supercritical carbon dioxide. *J. of Supercritical Fluids,* 2007, vol. 41, 179-186
- **Y. YAMINI ; A. SALEH ; M. KHAJEH.** Orthogonal array design for the optimization of supercritical carbon dioxide extraction of platinum (IV) and rhenium (VII) from a solid matrix using Cyanex 301. *Separation and Purification Technologies,* 2008, vol. 61, 109-114
- **L. LINGXINGYU ; K. LEOPOLD.** *J. Anal. Chem.,* 2012, vol. 84, 4340-4349
- **Y. J. PARK.** *J. Hazardous Materials,* 2009, vol. 164, 1152-1158